# EUROPEAN PATENT APPLICATION

(11) **EP 4 160 964 A1**
(43) Date of publication of application: **05.04.2023**
(21) Application number: 21200300.8
(22) Date of filing: 30.09.2021
(51) Int. Cl.: H04L 5/00

(54) **USER EQUIPMENT AND BASE STATION INVOLVED IN MONITORING OF A DOWNLINK CONTROL CHANNEL**

(71) Applicant: Panasonic Intellectual Property Corporation of America, Torrance, CA 90504 (US)
(72) Inventor: KUANG, Quan, 63225 Langen (DE); SUZUKI, Hidetoshi, Osaka, 571-8501 (JP)
(74) Representative: Grünecker Patent- und Rechtsanwälte PartG mbB

(57) **Abstract**

The present disclosure relates to a user equipment, UE, comprising the following. Processing circuitry determines, for a time slot group, one or more time slots to be monitored by the UE according to a monitoring function, operated by the UE for monitoring a downlink control channel in one or more monitoring occasions in one or more time slots for receiving downlink control information. The determining of monitoring time slots is performed in accordance with one or more of the following:
• a first criterion according to which a monitoring time slot includes a monitoring occasion associated with a common search space of the downlink control channel,
• a second criterion according to which a monitoring time slot includes a monitoring occasion associated with a UE-specific search space of the downlink control channel.

Then, the processing circuitry monitors the downlink control channel in the determined monitoring time slots of the time slot group.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the next generation cellular technology, which is also called fifth generation (5G).

One objective is to provide a single technical framework addressing all usage scenarios, requirements and deployment scenarios (see e.g. section 6 of 3GGP TR 38.913 version 16.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

### SUMMARY

One non-limiting and exemplary embodiment facilitates providing procedures for a UE to perform an improved downlink control channel procedure.

In an embodiment, the techniques disclosed here feature a user equipment, UE, comprising the following. A processing circuitry of the UE determines, for a group of two or more time slots, one or more time slots in said time slot group to be monitored by the UE according to a monitoring function, wherein the monitoring function is operated by the UE for monitoring a downlink control channel in one or more monitoring occasions in one or more time slots for the purpose of receiving a downlink control information message. The processing circuitry performs the determining of the monitoring time slots within said time slot group in accordance with one or more of the following criteria:
- a first criterion according to which a monitoring time slot includes a monitoring occasion associated with a common search space of the downlink control channel,
- a second criterion according to which a monitoring time slot includes a monitoring occasion associated with a UE-specific search space of the downlink control channel.

Then, the processing circuitry monitors the downlink control channel in the determined one or more monitoring time slots of the time slot group.

It should be noted that general or specific embodiments may be implemented as a system, a method, an integrated circuit, a computer program, a storage medium, or any selective combination thereof. For instance, an integrated circuit can control a process of a UE or base station.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC,
- **Fig. 3**: is a sequence diagram for RRC connection setup/reconfiguration procedures,
- **Fig. 4**: is a schematic drawing showing usage scenarios of Enhanced mobile broadband (eMBB), Massive Machine Type Communications (mMTC) and Ultra Reliable and Low Latency Communications (URLLC),
- **Fig. 5**: is a block diagram showing an exemplary 5G system architecture for a non-roaming scenario,
- **Fig. 6**: illustrates the relationship between Bandwidth Parts, Control Resource Sets (CORESETS), search spaces, search space sets, and PDCCH candidates,
- **Fig. 7**: illustrates an exemplary time-domain structure in a communication system, such as 5G NR, including radio frames, subframes, slots, and OFDM symbols for different subcarrier spacings,
- **Fig. 8**: illustrates the resulting slot lengths and OFDM symbols for high subcarrier spacings to be used in a new frequency range of 52.6 - 72 GHz,
- **Fig. 9**: illustrates the use of time slot groups for grouping time slots in the time domain,
- **Fig. 10**: illustrates the beam sweeping of the downlink control channel, particularly the common search space, with four beams and the reception by two UEs,
- **Fig. 11**: illustrates the resulting timing of the beam-sweeping CSS, particularly the CSS being located in different time slots within each time slot group and assuming a fixed location of the monitoring time slots for the two UEs
- **Fig. 12**: an exemplary and simplified structure of a UE and gNB,
- **Fig. 13**: illustrates a structure of the UE according to an exemplary implementation of an improved downlink control channel monitoring procedure,
- **Fig. 14**: is a flow diagram for the UE behavior, according to an exemplary implementation of the improved downlink control channel monitoring procedure,
- **Fig. 15**: illustrates a structure of the base station according to an exemplary implementation of an improved downlink control channel monitoring procedure,
- **Fig. 16**: is a flow diagram for the base station behavior that participates in an exemplary implementation of the improved downlink control channel monitoring procedure,
- **Fig. 17**: is a signaling diagram illustrating an exemplary exchange between the UE and the gNB for an exemplary implementation of the improved downlink control channel monitoring procedure,
- **Fig. 18-**: is a flow diagram for the UE behavior, according to an exemplary implementation of a first solution of the improved downlink control channel monitoring procedure,
- **Fig. 19-23**: illustrate the configuration of CSS MOs and USS MOs and the resulting Y monitoring time slots, according to exemplary implementations of a first solution the improved downlink control channel monitoring procedure,
- **Fig. 24**: is a flow diagram for the UE behavior, according to an exemplary implementation of a second solution of the improved downlink control channel monitoring procedure,
- **Fig. 25-28**: illustrate the configuration of CSS MOs and USS MOs and the resulting Y monitoring time slots, according to exemplary implementations of a second solution the improved downlink control channel monitoring procedure,
- **Fig. 29**: is a flow diagram for the UE behavior, according to an exemplary implementation of the second solution of the improved downlink control channel monitoring procedure, including the check as to whether the MO configured is changed or not,
- **Fig. 30**: illustrates the configuration of CSS MOs and USS MOs and the resulting Y monitoring time slots, according to an exemplary implementation of the solution of Fig. 29,
- **Fig. 31**: illustrates the configuration of CSS MOs and USS MOs and the resulting Y monitoring time slots, and particularly the back-to-back problem,
- **Fig. 32**: illustrates the configuration of CSS MOs and USS MOs and the resulting Y monitoring time slots, and ways to solve the back-to-back problem of Fig. 30, particularly when applying the first solution and
- **Fig. 33**: illustrates the configuration of CSS MOs and USS MOs and the resulting Y monitoring time slots, and ways to solve the back-to-back problem of Fig. 30, particularly when applying the second solution.

### DETAILED DESCRIPTION

### 5G NR system architecture and protocol stacks

3GPP has been working at the next release for the 5^{th} generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

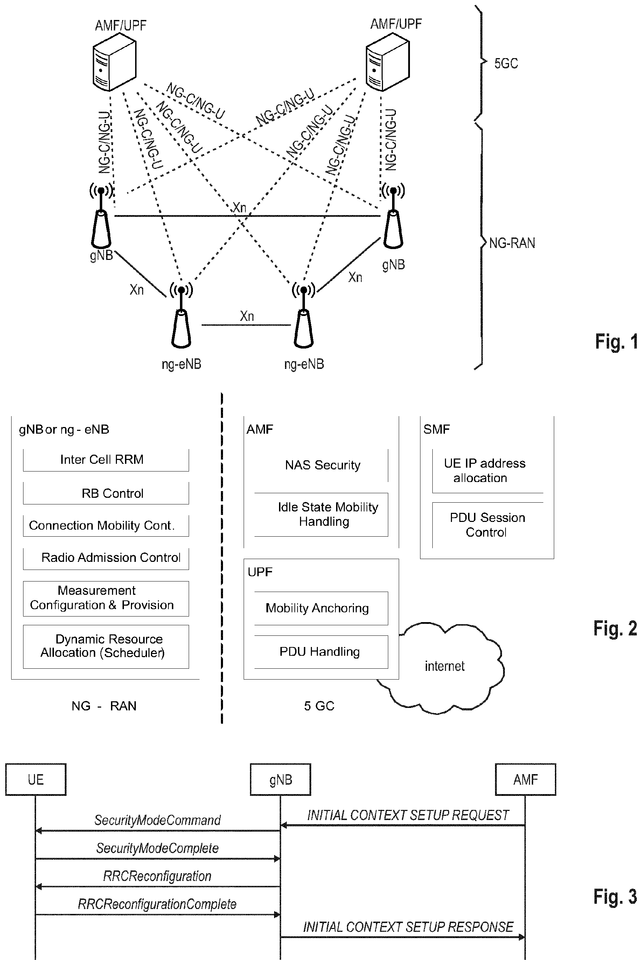

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v16.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15 kHz, 30 kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.6.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element (IE) to the UE via the signaling radio bearer. The UE then performs an uplink transmission or a downlink reception based on the resource allocation configuration.

### Usage Scenarios of IMT for 2020 and beyond

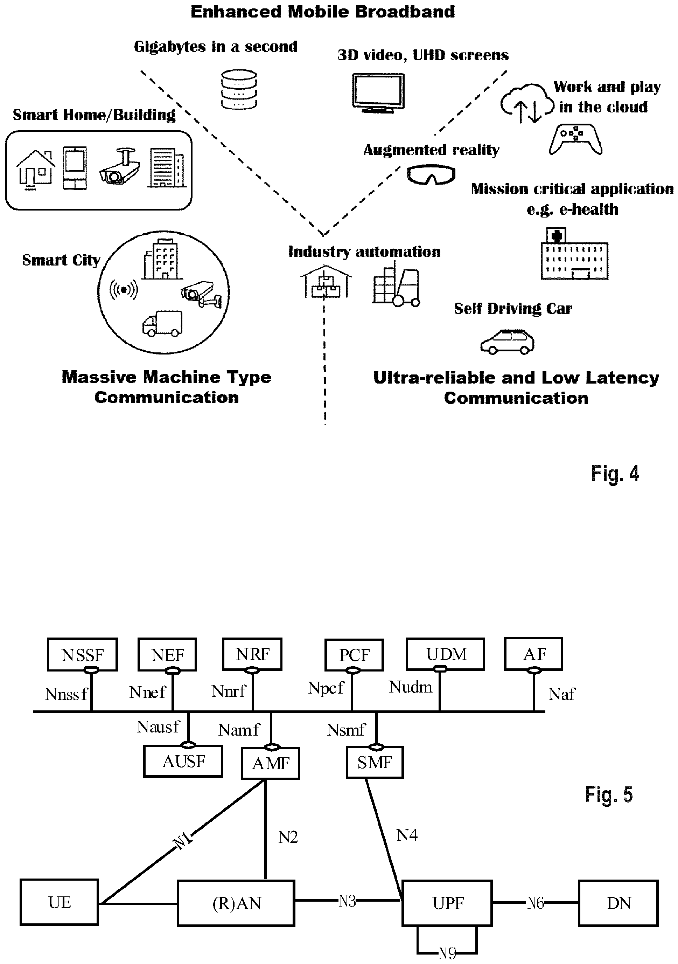

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913 version 16.0.0. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see e.g. 3GPP TS 23.501 v16.9.0 or v17.1.1, section 4.2.3). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and control circuitry, which, in operation, performs the services using the established PDU session.

### Bandwidth Parts

NR systems will support much wider maximum channel bandwidths than LTE's 20 MHz bandwidth (e.g. 100 MHz). Wideband communication is also supported in LTE via carrier aggregation (CA) of up to 20-MHz component carriers. By defining wider channel bandwidths in NR, it is possible to dynamically allocate frequency resources via scheduling, which can be more efficient and flexible than the Carrier Aggregation operation of LTE, whose activation/deactivation is based on MAC Control Elements. Having a single wideband carrier also has merit in terms of low control overhead, as it needs only a single control signaling (Carrier Aggregation requires separate control signaling per each aggregated carrier).

Moreover, like LTE, NR may also support the aggregation of multiple carriers via carrier aggregation or dual connectivity.

Since UEs are not always demanding high data rates, the use of a wide bandwidth may incur higher idling power consumption both from RF and baseband signal processing perspectives. In this regard, a newly developed concept of bandwidth parts for NR provides a means of operating UEs with smaller bandwidths than the configured channel bandwidth, so as to provide an energy-efficient solution despite the support of wideband operation. Any low-end terminal, which cannot access the whole bandwidth for NR, can benefit therefrom.

A bandwidth part (BWP) is a subset of the total cell bandwidth of a cell, e.g. defined by the location and number of contiguous physical resource blocks (PRBs). It may be defined separately for uplink and downlink. Furthermore, each bandwidth part can be associated with a specific OFDM numerology, e.g. with a subcarrier spacing and cyclic prefix. For instance, bandwidth adaptation is achieved by configuring the UE with BWP(s) and telling the UE which of the configured BWPs is currently the active one.

Exemplarily, in 5G NR, a specific BWP is configured only for a UE in RRC_Connected state. For instance, other than an initial BWP (e.g. respectively one for UL and one for DL), a BWP only exists for UEs in connected state. To support the initial data exchange between the UE and the network, e.g. during the process of moving a UE from RRC_IDLE or RRC_INACTIVE state to RRC_CONNECTED state, the initial DL BWP and initial UL BWP are configured in the minimum system information.

Although the UE can be configured with more than one BWP (e.g. up to 4 BWP per serving cell, as currently defined for NR), the UE has only one active DL BWP at a time. Switching between configured BWPs may be achieved for instance by means of downlink control information (DCls).

For the Primary Cell (PCell), the initial BWP is the BWP used for initial access, and the default BWP is the initial one unless another initial BWP is explicitly configured. For a Secondary Cell (SCell), the initial BWP is always explicitly configured, and a default BWP may also be configured. When a default BWP is configured for a serving cell, the expiry of an inactivity timer associated to that cell switches the active BWP to the default one.

Some DCI formats do not contain the BWP ID (such as Formats 0_0 and 1_0), while in other DCI formats the number of bits for BWP ID is RRC-configurable and could be 0, 1, 2 bits (such as for Formats 0_1, 0_2, 1_1, and 1_2).

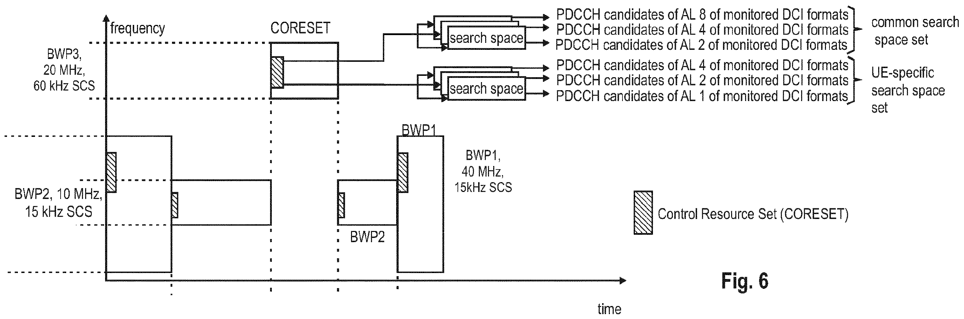

**Fig. 6** illustrates a scenario where three different BWPs are configured, BWP1 with a frequency bandwidth of 40 MHz and a subcarrier spacing of 15 kHz, BWP2 with a width of 10 MHz and a subcarrier spacing of 15 kHz, and BWP3 with a width of 20 MHz and subcarrier spacing of 60 kHz.

### Control information - Search space sets

PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed, e.g., downlink control information, DCI) has basically the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI formats defined already (see TS 38.212 v16.6.0 section 7.3.1). An overview is given by the following table.

| **DCI format** | **Usage** |
|---|---|
| 0_0 | Scheduling of PUSCH in one cell |
| 0_1 | Scheduling of PUSCH in one cell |
| 0_2 | Scheduling of PUSCH in one cell |
| 1_0 | Scheduling of PDSCH in one cell |
| 1_1 | Scheduling of PDSCH in one cell |
| 1_2 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |
| 2_4 | Cancel UL transmission |
| 2_5 | Notify availability of soft resources |
| 2_6 | Notify power saving information |
| 3_0 | Scheduling for Sidelink, NR PSCCH and NR PSSCH in one cell; |
| 3_1 | Scheduling for Sidelink; LTE PSCCH and LTE PSSCH in one cell |

In 5G NR, PDCCH is transmitted in radio resource regions called control resource sets (CORESETs). In LTE, the concept of a CORESET is not explicitly present. Instead, PDCCH in LTE uses the full carrier bandwidth in the first 1-3 OFDM symbols (four for the most narrowband case). By contrast, a CORESET in NR can occur at any position within a slot and anywhere in the frequency range of the carrier, except that the UE is not expected to handle CORESETs outside its active bandwidth part (BWP).

Accordingly, a UE performs a monitoring operation of the PDCCH, e.g. as defined in 3GPP TS 38.213 version 16.6.0, sections 10 and 11. As exemplarily defined therein, the UE monitors a set of PDCCH candidates, which is defined in terms of PDCCH search space sets. A search space set can be a common search space set (CSS set) or a UE-specific search space set (USS set). As defined exemplarily by 3GPP TS 38.213 v16.6.0, section 10.1, a UE monitors PDCCH candidates in one or more of the following CSS and USS sets:
- a Type0-PDCCH CSS set configured by *pdcch-ConfigSIB1* in *MIB* or by *searchSpaceSIB1* in *PDCCH-ConfigCommon* or by *searchSpaceZero* in *PDCCH-ConfigCommon* for a DCI format with CRC scrambled by a SI-RNTI on the primary cell of the MCG
- a TypeOA-PDCCH CSS set configured by *searchSpaceOtherSystemInformation* in *PDCCH-ConfigCommon* for a DCI format with CRC scrambled by a SI-RNTI on the primary cell of the MCG
- a Type1-PDCCH CSS set configured by *ra-SearchSpace* in *PDCCH-ConfigCommon* for a DCI format with CRC scrambled by a RA-RNTI, a MsgB-RNTI, or a TC-RNTI on the primary cell
- a Type2-PDCCH CSS set configured by *pagingSearchSpace* in *PDCCH-ConfigCommon* for a DCI format with CRC scrambled by a P-RNTI on the primary cell of the MCG
- a Type3-PDCCH CSS set configured by *SearchSpace* in *PDCCH-Config* with *searchSpaceType = common* for DCI formats with CRC scrambled by INT-RNTI, SFI-RNTI, TPC-PUSCH-RNTI, TPC-PUCCH-RNTI, TPC-SRS-RNTI, or CI-RNTI and, only for the primary cell, C-RNTI, MCS-C-RNTI, CS-RNTI(s), or PS-RNTI and
- a USS set configured by *SearchSpace* in *PDCCH-Config* with *searchSpaceType = ue-Specific* for DCI formats with CRC scrambled by C-RNTI, MCS-C-RNTI, SP-CSI-RNTI, CS-RNTI(s), SL-RNTI, SL-CS-RNTI, or SL Semi-Persistent Scheduling V-RNTI.

Search space sets are monitored in one or more CORESETs on the active DL BWP on each activated serving cell configured with PDCCH monitoring using the corresponding search space sets, where monitoring implies decoding each PDCCH candidate according to the monitored DCI formats.

The first CORESET, CORESET 0, is provided by the master information block (MIB) as part of the configuration of the initial bandwidth part to be able to receive the remaining system information and additional configuration information from the network. After connection setup, a UE can be configured with multiple CORESETs using RRC signalling.

In an exemplary 5G NR implementation, a search space may comprise a plurality of PDCCH candidates associated with the same aggregation level (e.g. where PDCCH candidates differ regarding the DCI formats to monitor). In turn, a search space set may comprise a plurality of search spaces of different aggregation levels, but being associated with the same CORESET. Unlike in LTE, as mentioned above, where control channels span the entire carrier bandwidth, the bandwidth of a CORESET can be configured, e.g. within an active DL frequency bandwidth part (BWP). Put differently, the CORESET configuration defines the frequency resources for the search space set and thus for the comprised PDCCH candidates of the search spaces in the set. The CORESET configuration also defines the duration of the search space set, which can have a length of one to three OFDM symbols. On the other hand, the start time is configured by the search space set configuration itself, e.g. at which OFDM symbol of a certain slot the UE starts monitoring the PDCCH of the search spaces of the set. In combination, the configuration of the search space set and the configuration of the CORESET provide an unambiguous definition in the frequency and time domain about the PDCCH monitoring requirements of the UE (see e.g. 3GPP TS 38.213 v16.6.0, section 10.1).

Conceptually, **Fig. 6** provides an exemplary illustration of the relationship between bandwidth parts, CORESETS, search spaces, search space sets and the PDCCH candidates that a UE can monitor. As apparent from Fig. 6, one CORESET is illustrated per BWP, although more than one are possible. Each CORESET can then have several search spaces of one or more PDCCH candidates of a particular Aggregation Level (such as AL2, 4 or 8), which in turn can then be grouped into a search space set, such as a common SS set and a UE-specific SS set.

Both CORESET and search space set configurations can be semi-statically done via RRC signalling, wherein the corresponding RRC information elements are *ControlResourceSet* and *SearchSpace,* as e.g. provided below following the definitions in 3GPP TS 38.331 v16.5.0

### Time-domain in 5G NR

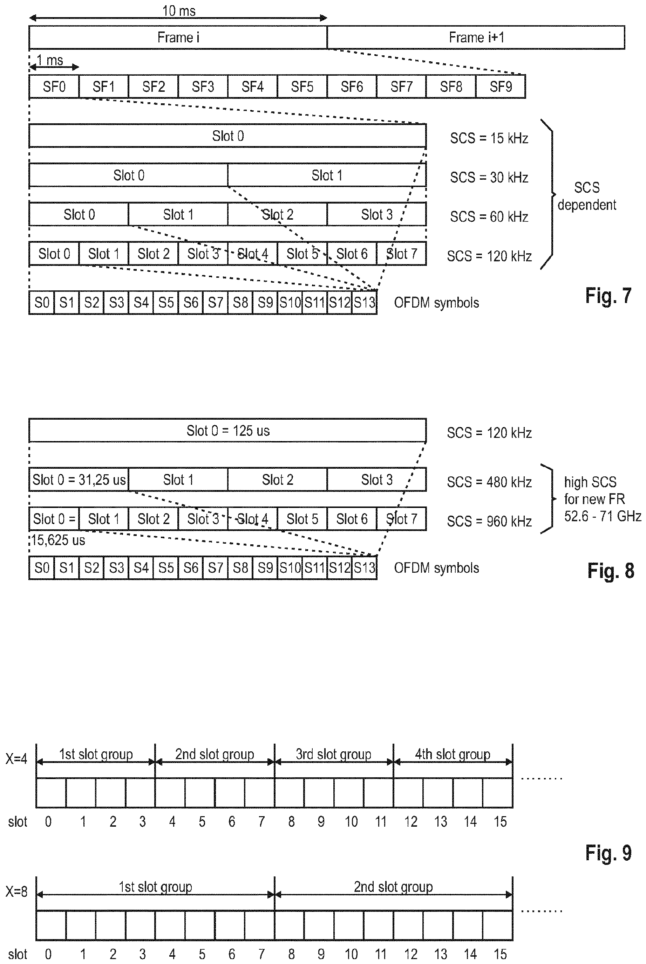

In the time domain, transmissions in 5G NR are organized into frames of length 10ms, each of which is divided into 10 equally sized subframes of length 1ms. A subframe in turn is divided into one or more slots consisting of 14 OFDM symbols each. The duration of a slot in milliseconds depends on the numerology. For instance, for the 15 kHz subcarrier spacing, an NR slot thus has the same structure as an LTE subframe with normal cyclic prefix. A subframe in 5G NR serves as a numerology-independent time reference, which is useful, especially in the case of multiple numerologies being mixed on the same carrier, while a slot is the typical dynamic scheduling unit. This frame structure, on which the 3GPP 5G NR communication is based, is illustrated exemplarily in **Fig. 7**.

### New frequency spectrum above 52 GHz

5G NR so far operates in two frequency ranges, FR1 and FR2. Frequency range 1 (FR1) is from 450 MHz to 6 GHz and includes the LTE. Frequency range 2 (FR2) is from 24.25 GHz to 52.6 GHz. The sub-6 GHz range is the name for FR1, and the mmWave spectrum is the name for FR2.

The relatively underutilized millimeter-wave (mmWave) spectrum offers excellent opportunities to provide high-speed data rate, low latency, and high capacity due to the enormous amount of available contiguous bandwidth. However, operation on bands in frequencies above 52.6GHz will be limited by the performance of devices, for example, poor power amplifier (PA) efficiency and larger phase noise impairment, the increased front-end insertion loss together with the low noise amplifier (LNA) and analog-to-digital converter (ADC) noise. In addition, bands in frequencies above 52.6GHz pose challenges regarding high propagation and penetration losses. Even so, various use cases are envisioned for NR operating in frequencies between 52.6GHz and 114.25GHz.

3GPP is currently discussing the use of a higher subcarrier spacing, such as 480 kHz and 960 kHz for higher frequencies above 52.6 GHz, such as the frequency range of 52.6 GHz - 71 GHz.

However, a higher SCS means a shorter symbol duration, and as a result a shorter slot duration. For instance, while one slot is 125 us for 120 kHz SCS, one slot is 31.25 us for a 480 kHz SCS and 15.625 us for a 960 kHz SCS.

**Fig. 8** illustrates a comparison of a slot length for an SCS of 120 kHz and the corresponding slot lengths for SCS of 480 kHz and 960 kHz. Furthermore, a radio frame has 32 slots for an SCS of 480 kHz, and 64 slots for an SCS of 960 kHz, respectively with 14 OFDM symbols per slot having a correspondingly short OFDM symbol duration.

These shortened OFDM symbol and slot durations may require a high processing capability at the UE side. UEs according to Rel. 15 or Rel. 16 should be capable of processing PDCCH every slot (single-slot monitoring capability). On the other hand, not every UE might be able to process every slot within such a short time in the higher frequency ranges of 52.6 - 71 GHz. Furthermore, even if practically possible, requiring such a processing timeline would significantly increase the UE complexity and power consumption.

Therefore, 3GPP discusses for Rel. 17 the feasibility of allowing the UE to monitor the PDCCH only every multiple slots for 480/960 kHz SCS, so called multi-slot monitoring; in other words, the UE does not have to monitor every slot.

### Multi-slot monitoring

3GPP currently discusses how to implement the multi-slot monitoring functionality, particularly based on the following framework:
- Use a fixed pattern of slot groups to define the capability
   ∘ Each slot group consists of X slots
   ∘ Slots groups are consecutive and non-overlapping
- UE is only required to monitor Y consecutive slots in each slot group, and can rest for the remaining X-Y slots
   ∘ Exemplary, 3GGP has discussed using X=4 slots for SCS 480 kHz, and X=8 slots for SCS 960kHz
   ∘ Exemplary, 3GPP has discussed limiting Y as follows: 1<=Y<=X/2

No further relevant agreements have been reached yet within 3GPP with respect to the multi-slot monitoring functionality.

**Fig. 9** illustrates how slots would be grouped into the slot groups, respectively with X=4 and X=8.

Although X is currently assumed to be 4 or 8, it should be noted that X is not limited to those values but can be other values, such as 2, 3, 5, 6, 7, 9, etc.

### Further Improvements

As presented above, one of the developments currently discussed in 3GPP relates to the multi-slot monitoring functionality, e.g. for high SCS and the high frequency range 52.6 - 71 GHz, which shall allow to reduce UE complexity and power consumption. However, at present it is unclear how to determine the location of the Y slots in each slot group; put differently, how to determine which slots within a slot group of X slots belong to Y and are thus to be monitored by the UE. Conceptually, two different schemes are possible:
- Scheme 1: the location of the Y slots is always fixed; e.g. the Y slots always start at the first slot within a slot group
- Scheme 2: the location of the Y slots is floating, i.e. changes, e.g. the location of the Y slots can be located anywhere in the slot group, and the location can change e.g. per slot group
However, both schemes have disadvantages as will be explained in the following.

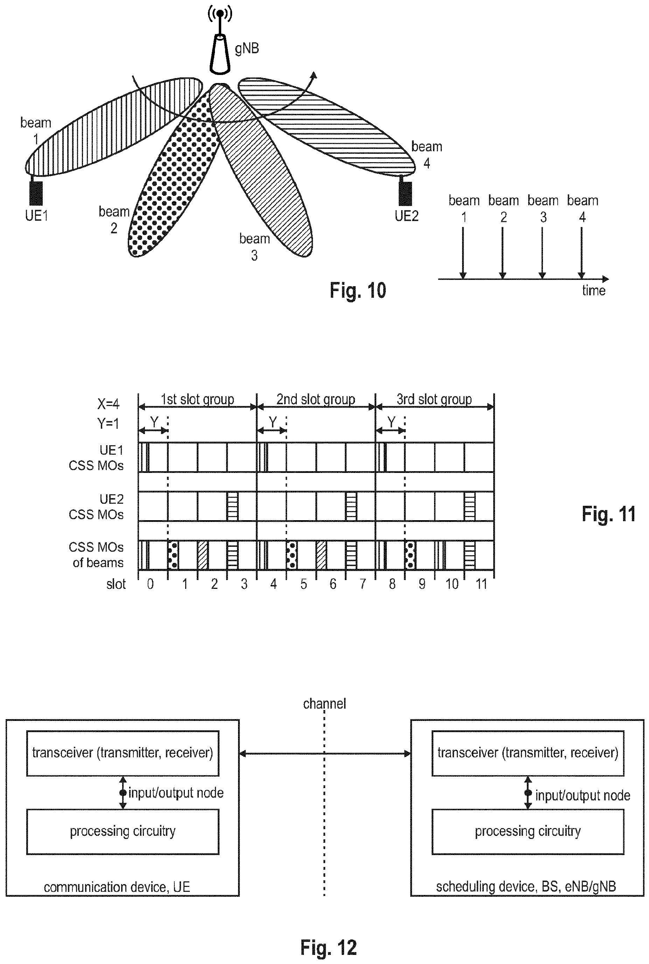

Since the location of the Y slots is fixed according to Scheme 1, there is no flexibility with regard to which slots belong to Y slots and thus no flexibility for the gNB to reach the UE. Also, a change of the Y slots during time would not be possible, which further limits the flexibility of the multi-slot monitoring and does not allow any adaptation, e.g. to traffic. The disadvantage connected with the fixed-Scheme 1 is explained with the following example, which assumes that the Common Search Space (CSS) is transmitted via Time-Division multiplexed (TDMed) beams in a beam-sweeping manner. **Fig. 10** illustrates four different beams of the beam sweeping transmission from the gNB and two UEs, UE1 and UE2. UE1 is assumed to be located in the area of beam 1, and UE2 is assumed to be located in the area of beam 4. The time diagram at the right-hand side of Fig. 10 illustrates how the sweeping transmission of the beams is time division multiplexed, e.g. occurs at different times.

**Fig. 11** is based on the exemplary assumptions of Fig. 10 and illustrates the reception of the CSS of each beam in respectively different slots, exemplary the CSS of beam 1 is received in slots 0, 4, 8 (etc.), the CSS of beam 2 in slots 1, 5, 9 (etc.), the CSS of beam 3 in slots 2, 6, 10 (etc.), and the CSS of beam 4 in slots 3, 7, 11 (etc.). It is further exemplarily assumed thatX=4, such that the slot groups respectively contain four slots, and that Y=1, such that the UE is to monitor one slot within each slot group while being allowed to rest for the remaining 3 slots. In the exemplary scenario of Fig. 11, the relative location of the Y slots is fixed to the first slot of each slot group, i.e. to slots 0, 4, 8,.... Furthermore, it is assumed that both UE1 and UE2 have the same fixed location of the Y slots.

In such a beam-sweeping transmission of the CSS, the UEs located in different beam directions may need to monitor different slots to receive the CSS, where UE1 would need to monitor in slot 0 and UE2 would need to monitor in slot 3. This might already contradict the Scheme 1, which requires a fixed location of the Y slots (for all UEs). Further, UE2 cannot receive the CSS in the scenario.

Moreover, even from a single-UE perspective, Scheme 1 is disadvantageous as well. For instance, the location of the UE may change and thus the serving beam of the UE. As a result, even if the UE is able to monitor the suitable slot to receive the CSS of a beam at some point of time, the UE might change the location and the beam and might thus no longer be able to receive the CSS via the new beam.

Overall, the multi-slot monitoring using slot groups according to Scheme 1 appears to involve significant disadvantages.

Conversely, according to the above-mentioned Scheme 2, the location of the Y slots can change and might avoid the above-explained disadvantages connected with Scheme 1. However, since the location of the Y slots is not fixed, an unambiguous rule is needed to determine the location of the Y slots at the UE and the gNB. Such a rule however is currently missing. Without such a rule, the gNB and the UE may have a different understanding of the location of Y, resulting in that the UE might not be able to correctly receive the PDCCH transmitted by the gNB.

The inventors have identified the above-discussed potential drawbacks and challenges and have thus identified the possibility of providing an improved monitoring procedure of the PDCCH (downlink control channel) that allows avoiding or mitigating one or more of the above-identified problems. The present invention relates to different solutions and variants for such an improved downlink control channel monitoring procedure, and more particularly relates to how to determine the location of the Y monitoring slots.

For instance, the improved downlink control channel monitoring procedure allows avoiding a misunderstanding of which Y slots of a slot group can be used to exchange the PDCCH.

### Embodiments

In the following, UEs, base stations, and respective procedures to meet these needs will be described for the new radio access technology envisioned for the 5G mobile communication systems, but which may also be used in previous LTE mobile communication systems or future mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes that should not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the respective features and embodiments. Consequently, a skilled person is aware that the embodiments and their scope of protection should not be restricted to particular terms exemplarily used herein for lack of newer or finally agreed terminology, but should be more broadly understood in terms of functions and concepts that underlie the functioning and principles of the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the UE and the base station is typically standardized and may be defined by different layers, such as PHY, MAC, RRC etc. (see above background discussion).

The expressions **"monitoring occasion"**, "downlink control channel monitoring occasion", "PDCCH monitoring occasion" and similar expressions are to be understood broadly, e.g. as a period of time (e.g. a set of one or more consecutive symbols) of a time slot where the UE is configured to monitor the corresponding downlink control channel (e.g. PDCCH, e.g. according to PDCCH candidates). For example, the UE determines monitoring occasions for each search space and search space set it is configured with. For instance, the UE determine a MO from both a search space set (e.g. Information Element SearchSpace) and a control resource set (e.g. Information Element ControlResourceSet).

The expression **"search space set"** can be broadly understood as a set of search spaces, with a plurality of search spaces, each search space comprising one or a plurality of possible candidates for receiving a DCI message. For instance, a **"search space"** groups various candidates with the same aggregation level but with a different format of the DCI message. In turn, for instance, the set of search spaces may then comprise search spaces of different aggregation levels, but being associated with a same set of time-frequency resources to be monitored (e.g. a same CORESET). Particular exemplary implementations of search space sets are given by the 3GPP 5G NR standards, as explained above.

The term **"monitoring"** can be broadly understood e.g. as the process of trying to decode a possible candidate for receiving a DCI message, e.g. based on a particular format. Such a decoding attempt can also be called blind decoding.

The expression **"monitoring candidate"** can be broadly understood as a particular candidate that is monitored by the UE within a monitoring occasion. In a particular exemplary implementation which is compliant with the 3GPP 5G NR standards, the "monitoring candidate" can be seen as the "PDCCH candidate".

For the following solutions it is exemplarily assumed that the improved downlink control channel monitoring procedure can be conceptually based on the PDCCH monitoring already defined according to 3GPP 4G or 5G standards, as explained above.

**Fig. 12** illustrates a general, simplified and exemplary block diagram of a user equipment (also termed communication device) and a scheduling device (here exemplarily assumed to be located in the base station, e.g. the eLTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

Different solutions of an improved downlink control channel monitoring procedure will be described in the following. In said connection, improved UEs, improved base stations and improved integrated circuits are presented, which participate in the improved downlink control channel monitoring procedures. Corresponding methods for the UE behavior and the base station behavior are provided as well. The integrated circuits correspond to the UE and base station, respectively their behavior.

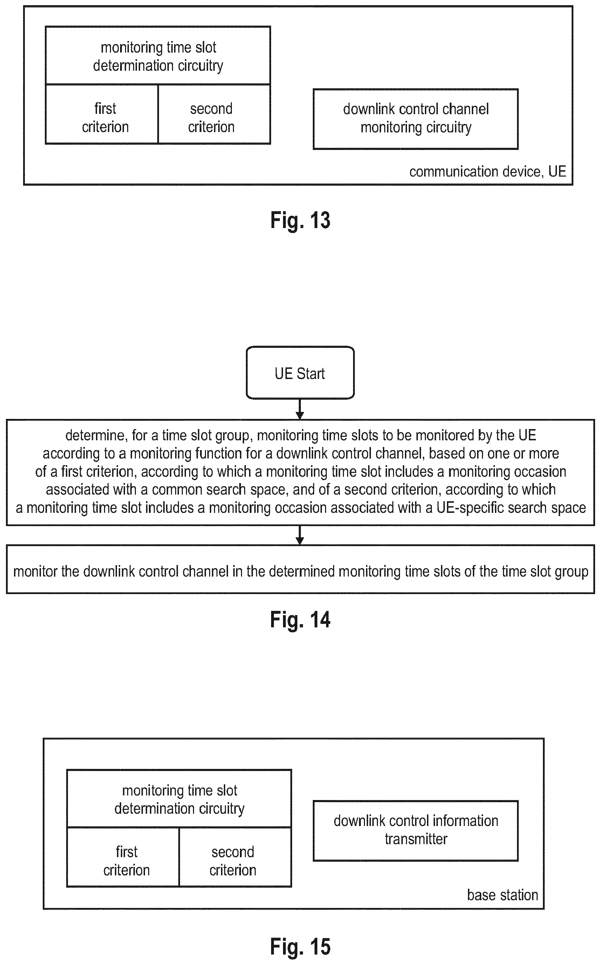

**Fig. 13** illustrates a simplified and exemplary UE structure according to an exemplary implementation of the improved downlink control channel monitoring procedure, which can be implemented based on the general UE structure explained in connection with Fig. 12. The various structural elements of the UE illustrated in said Fig. 13 can be interconnected between one another e.g. with corresponding input/output nodes (not shown) e.g. in order to exchange control and user data and other signals. Although not shown for illustration purposes, the UE may include further structural elements.

As apparent from Fig. 13, the UE may include circuitry for determining monitoring time slots, on the basis of a first and second criterion and a downlink control channel monitoring circuitry.

In the present case as will become apparent from the below disclosure, the receiver of the UE can thus be exemplarily configured to at least partly perform one or more of receiving a configuration message for configuring the monitoring function at the UE, receiving a downlink control information message on a downlink control channel, etc.

In the present case as will become apparent from the below disclosure, the processing circuitry of the UE can thus be exemplarily configured to at least partly perform one or more of determining monitoring time slots within corresponding time slot groups, considering different criteria for the determining of the monitoring time slots, monitoring the downlink control channel in the determined monitoring time slots etc.

In the present case as will become apparent from the below disclosure, the transmitter of the UE can thus be exemplarily configured to at least partly perform one or more of transmitting a capability indication to the base station, including information on the number of monitoring time slots that the UE supports within a time slot group, etc.

One exemplary procedure as will be disclosed in more detail further below is implemented by a UE that includes the following. A processing circuitry of the UE determines, for a group of two or more time slots, one or more time slots in said time slot group to be monitored by the UE according to a monitoring function, wherein the monitoring function is operated by the UE for monitoring a downlink control channel in one or more monitoring occasions in one or more time slots for the purpose of receiving a downlink control information message. The processing circuitry performs the determining of the monitoring time slots within said time slot group in accordance with one or more of the following criteria:
- a first criterion according to which a monitoring time slot includes a monitoring occasion associated with a common search space of the downlink control channel,
- a second criterion according to which a monitoring time slot includes a monitoring occasion associated with a UE-specific search space of the downlink control channel.

Then, the processing circuitry monitors the downlink control channel in the determined one or more monitoring time slots of the time slot group.

A corresponding exemplary method comprises the following steps performed by a UE:
determining, for a group of two or more time slots, one or more time slots in said time slot group to be monitored by the UE according to a monitoring function, wherein the monitoring function is operated by the UE for monitoring a downlink control channel in one or more monitoring occasions in one or more time slots for the purpose of receiving a downlink control information message,
performing the determining of the monitoring time slots within said time slot group in accordance with one or more of the following criteria:
   - a first criterion according to which a monitoring time slot includes a monitoring occasion associated with a common search space of the downlink control channel,
   - a second criterion according to which a monitoring time slot includes a monitoring occasion associated with a UE-specific search space of the downlink control channel, and
monitoring the downlink control channel in the determined one or more monitoring time slots of the time slot group.

A corresponding sequence diagram for an exemplary UE behaviour in line with the above-discussed UE and UE method is illustrated in **Fig. 14**. As apparent therefrom, the UE determines, for a time slot group, the monitoring time slots to be monitored by the UE according to the monitoring function. The determination is based on one or more criteria, including a first criterion according to which a monitoring time slots includes a monitoring occasion associated with a common search space, and including a second criterion, according to which a monitoring time slots includes a monitoring occasion associated with a UE-specific search space. After the corresponding determination, the UE can monitor the downlink control channel in the determined monitoring time slots of the time slot group.

The above improved UE behaviour correspondingly implements a multi-slot monitoring functionality, as currently discussed in 3GPP as Scheme 2. Correspondingly, the location of the monitoring time slots is flexible and depends on monitoring occasions configured for the common search spaces and the UE-specific search spaces.

Further, by specifying a limited amount monitoring slots within each time slot group, the UE is allowed to not monitor the downlink control channel in the remaining time slots of each time slot group, i.e. in those time slots that are not the monitoring time slots.

By having a flexible location of the monitoring time slots in each time slot group, the improved UE behaviour avoids the disadvantages caused by a fixed location, as explained above in connection with Scheme 1, e.g. avoids the inflexibility of the gNB for reaching UEs, avoids the inflexibility of adapting the monitoring time slots to traffic or new beams, avoids that some UEs cannot even receive any downlink control information message, etc.

Furthermore, the improved UE behaviour facilitates having an advantage in that the location of the monitoring time slots can be different between different UEs, such that the gNB is more flexible in transmitting control information to several UEs in different downlink resources. Further, when changing the beam, including the monitoring occasions, the UE can perform a new determination and thereby adapt the monitoring time slots to fit the new situation.

Moreover, defining an unambiguous behaviour of the UE for the purpose of determining the location of the monitoring time slots within a time slot group facilitates that the base station and the UE would have the same understanding of the Y monitoring time slots, thereby facilitating the UE to correctly receive a downlink transmission from the base station.

It was described that the UE performs the determining of the monitoring time slots in accordance with the two criteria, such that the determined monitoring time slots include a monitoring occasion associated with a CSS or USS. This UE behaviour thus requires the determination to select monitoring time slots that have a CSS and/or USS until the UE reaches the maximum number of monitoring time slots available for the time slot group.

Some exemplary implementations of the improved downlink control channel monitoring procedure also involve the base station, to which the UE is currently connected (termed e.g. serving base station because the base station serves the UE). Correspondingly, the improved downlink control channel monitoring procedure also provides an improved base station that participates therein.

**Fig. 15** illustrates a simplified and exemplary base station structure according to an exemplary implementation of the improved downlink control channel monitoring procedure, which can be implemented based on the general base station structure explained in connection with Fig. 12. The various structural elements of the base station illustrated in said Fig. 15 can be interconnected between one another e.g. with corresponding input/output nodes (not shown) e.g. in order to exchange control and user data and other signals. Although not shown for illustration purposes, the base station may include further structural elements.

As apparent therefrom, the base station comprises circuitry for determining monitoring time slots, on the basis of a first and second criterion, and downlink control information transmitter.

One exemplary procedure as will be disclosed in more detail further below is implemented by a base station that includes the following. A processing circuitry of the base station determines, for a group of two or more time slots, one or more time slots in said time slot group to be monitored by a user equipment, UE, according to a monitoring function, wherein the monitoring function is operated by the UE for monitoring a downlink control channel in one or more monitoring occasions in one or more time slots for the purpose of receiving a downlink control information message transmitted from the base station. The processing circuitry performs the determining of the monitoring time slots within said time slot group in accordance with one or more of the following criteria:
- a first criterion according to which a monitoring time slot includes a monitoring occasion associated with a common search space of the downlink control channel,
- a second criterion according to which a monitoring time slot includes a monitoring occasion associated with a UE-specific search space of the downlink control channel, and

A transmitter of the base station transmits, to the UE, a downlink control information message on the downlink control channel in at least one of the determined one or more monitoring time slots of the time slot group.

A corresponding method comprises the following steps performed by the base station:
determining, for a group of two or more time slots, one or more time slots in said time slot group to be monitored by a user equipment, UE, according to a monitoring function, wherein the monitoring function is operated by the UE for monitoring a downlink control channel in one or more monitoring occasions in one or more time slots for the purpose of receiving a downlink control information message transmitted from the base station,
performing the determining of the monitoring time slots within said time slot group in accordance with one or more of the following criteria:
   - a first criterion according to which a monitoring time slot includes a monitoring occasion associated with a common search space of the downlink control channel,
   - a second criterion according to which a monitoring time slot includes a monitoring occasion associated with a UE-specific search space of the downlink control channel, and
transmitting, to the UE, a downlink control information message on the downlink control channel in at least one of the determined one or more monitoring time slots of the time slot group.

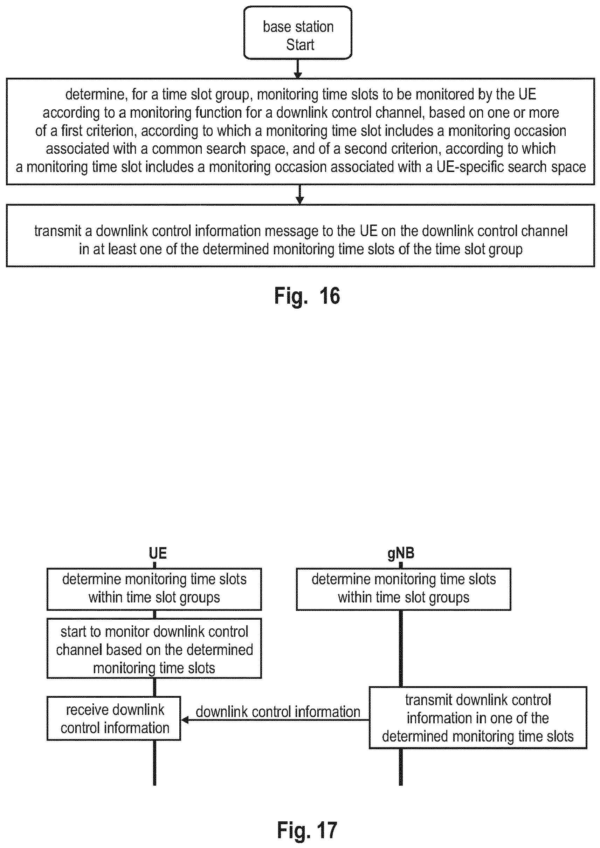

A corresponding sequence diagram for an exemplary base station behavior in line with the above-discussed base station and corresponding method is illustrated in **Fig. 16****.** The sequence diagram illustrates an exemplary and simplified implementation of the above presented base station method. As apparent therefrom, the base station determines, for a time slot group, monitoring time slots based on one or more of a first criterion, according to which a monitoring time slot includes a monitoring occasion associated with a common search space, and of a second criterion, according to which a monitoring time slot includes a monitoring occasion associated with a UE-specific search space. Then, the base station transmits a downlink control information message to the UE on the downlink control channel in at least one of the determined monitoring time slots of the time slot group.

**Fig. 17** illustrates a simplified and exemplary interaction between the improved UE and improved base station (here e.g. gNB) of the above discussed improved downlink control channel monitoring procedure. In this solution presented in Fig. 17, the interaction involves a corresponding determination by the UE and the base station of monitoring time slots within the time slot groups so as to facilitate a common understanding of the monitoring time slots for the subsequent reception respectively transmittal of downlink control information between the UE and the base station. Put differently, the process of determining the monitoring time slots for each time slot group can be the exactly the same at the UE side and the gNB side, while other processes of the improved downlink control channel procedure may be different between the UE and the BS.

Then, the UE may start monitoring the downlink control channel based on the thus determined monitoring time slots, thus allowing the UE to receive downlink control information from the gNB. On the other hand, the base station eventually will have downlink control information available for the UE, and will proceed to transmit the available downlink control information in one of the determined monitoring time slots. The UE, based on the monitoring of the determined monitoring time slots, will accordingly be able to receive the downlink control information from the base station.

The above explained improved downlink control channel monitoring procedure is based on the use of a first and second criterion. According to one exemplary implementation thereof, the first criterion, relating to the common search space, is considered first before the second criterion, relating to the UE-specific search space, when determining the monitoring time slots within the time slot group. Correspondingly, common search spaces will be prioritized over UE-specific search spaces for being included in the monitoring time slots, thereby facilitating that the UE does not miss important control information that is broadcast by the base station in the common search spaces.

According to one example in line therewith, for the number Y of monitoring time slots within a time slot group, the UE thus first determines which time slots of the time slot group contain a monitoring occasion of a common search space and then determines those time slots to be monitoring time slots for the time slot group, and subsequently, the UE determines which time slots of the time slot group contain a monitoring occasion of a UE-specific search space and then determines those time slots to be monitoring time slots for the time slot group. These steps are performed by the UE until the number Y of monitoring time slots is reached.

In addition or alternatively, a further prioritization level can be implemented in the above explained improved downlink control channel monitoring procedure, in particular with respect to the UE-specific search spaces. It is assumed that the UE-specific search spaces are associated with different priorities, such that the UE-specific search spaces are considered for being included in the monitoring time slots in the order of their priority. In one option, the priority of the UE-specific search spaces is indicated by the indices of the UE-specific search spaces, where the lower the index of a UE-specific search space, the higher is its priority for being included in a monitoring time slot. An advantage of such a prioritization of the USS can be that if not all configured USS can be included into the monitoring time slots (e.g. due to the UE capability in terms of value Y), both UE and gNB know which USS can be included and which USS would be dropped.

In another option, the priority of the UE-specific search spaces is represented by the distance (in time domain) from the common search spaces. The closer the MO of UE specific search spaces to the MO of common search spaces is, the higher the priority is.

According to another variation, the determination of the monitoring time slots does not consider all common search spaces but only a reduced set of common search spaces of the downlink control channel. In particular, the determination can distinguish between the different common search spaces with which a UE can be configured.

In one example, this reduced set of common search spaces includes common search spaces that are configured in a dedicated message to the UE and/or includes common search spaces that are configured commonly for a group of UEs. Correspondingly, this reduced CSS set thus includes common search spaces that are configured for a UE or a specific group of UEs, but that are not necessarily configured for all UEs (served by a cell of the gNB). In a 3GPP 5G compliant implementation, the reduced CSS set may include the Type-1 CSS configured by a dedicated message (e.g. RRC) to the UE and the Type-3 CSS (for details see above explanation of the different types of CSS). The Type3-PDCCH common search space is a group-common search space (i.e. a common search space assigned to a group of UEs, e.g. not necessarily to all UEs).

Using such a reduced CSS set facilitates a flexible location of the Y monitoring time slots, because the CSS to be considered for determining the monitoring time slots are UE-specific, respectively UE-group specific. From the perspective of the base station serving many UEs, the location of the Y monitoring time slots varies more, because the reduced CSS set is used for the determination. Put differently, since both the reduced CSS set and the USS are UE-specific (respectively UE-group specific), the location of the Y monitoring time slots is more likely to be different for different UEs (or group of UEs). Thereby, the scheduling flexibility at the base station is increased, because different time resources defined by the monitoring time slots can be used for transmitting the downlink control information to different UEs.

On the other hand, the UE would not be able to receive the remaining CSS, i.e. the CSS not included in the reduced CSS set, e.g. in the above example, the Type1-PDCCH common search space that was not configured in a dedicated RRC message, the Type0, Type0A and Type2 common search spaces. In order to avoid this, another example defines further monitoring opportunities within a time slot group for the UE outside the Y monitoring time slots the UE to monitor one or more or all of the remaining CSS. The further monitoring opportunities may correspondingly be defined by the location of the remaining CSS (and its monitoring occasions) configured to the UE to be monitored additionally by the UE, e.g. those time slots within the time slot group containing one or more of the remaining CSS. Conversely, the BS can transmit the remaining CSS in further monitoring opportunities within the time slot group outside the Y monitoring time slots, as defined by the corresponding monitoring occasions of the remaining CSS.

In another converse example, this reduced set of common search spaces includes only the common search spaces that are to be received by all UEs (served by a cell of the gNB), e.g. one or more of the Type1-PDCCH common search space that was not configured in a dedicated RRC message, the TypeO, TypeOA and Type2 common search spaces. In this way, it becomes possible to align the location of Y for all UEs. Although from the scheduling node (e.g. gNB) perspective the scheduling flexibility is reduced by using the same location of Y for all UEs, the scheduling complexity is reduced as well compared to the case where different UEs have different locations of Y, because the gNB is no longer needed to keep tracking of the location of Y for different UEs for scheduling.

There can be cases where there is neither a CSS or a USS for a monitoring time slot, such that the UE cannot determine a monitoring time slot including a CSS or USS. In such cases, the UE can determine a further suitable time slots as a "nominal" monitoring time slot, although no MO exists in it, and the UE might not be required to monitor any MO in said "nominal" monitoring time slots. Alternatively, no further monitoring time slot need to be defined, because there are no further MOs to be monitored by the UE. In this case, the number of monitoring slots in a time slot group is lower than Y.

The above present improved downlink control channel monitoring procedure, and the related UEs, base stations, involve the determination of the monitoring time slots for a time slot group.

Different solutions of the above explained improved downlink control channel monitoring procedure will be presented in the following on how to implement the step of determination the monitoring time slots as illustrated in Fig. 14 for the UE side and in Fig. 16 for the base station side. Correspondingly, the particular details provided in the following first and second solutions are applicable to both the UE and BS, irrespective of whether the explanations are presented from the perspective of only one entity, be it the UE or the BS.

As an overview, a first solution is based on the concept that the determining of the monitoring time slots is performed for each time slot group separately, e.g. the monitoring time slots are determined for each time slot group based on the monitoring occasions of said time slot group.

Conversely, a second solution is based on the concept that the determining of the monitoring time slots is performed for a plurality of time slot groups together, e.g. the determining of the monitoring time slots is performed once, taking into account the monitoring occasions of the plurality of time slot groups, and the resulting common relative location of the monitoring time slots within a time slot group is then applied commonly for each of the plurality of time slot groups.

Before discussing in detail the first and second solutions, exemplary assumptions will be presented that are the basis for explaining the first and second solutions. The following assumptions are primarily provided so as to facilitate the explanation of the different solutions, which however can also be implemented without these assumptions or with different underlying assumptions. As presented before, there is current discussion on multi-slot monitoring, including the use of time slot groups, which are consecutive and non-overlapping in time and each of which includes X time slots. For the explanations below, it is exemplary assumed that a time slot group comprises 4 time slots. Likewise, it is exemplarily assumed that the number Y of monitoring time slots within a time slot group is 1 or 2 slots.

Moreover, the process of determining the monitoring time slots for each time slot group can be exactly the same at the UE side and the gNB side. Other processes of the improved downlink control channel procedure may be different between the UE and the BS, such as the monitoring for a downlink control message at the UE side and the corresponding transmission of the downlink control message at the BS side (see also Fig. 17).

### First solution

In a first solution of the improved downlink control channel monitoring procedure, the determining of the monitoring time slots is performed for each time slot group separately, e.g. the monitoring time slots are determined for each time slot group based on the monitoring occasions of said time slot group.

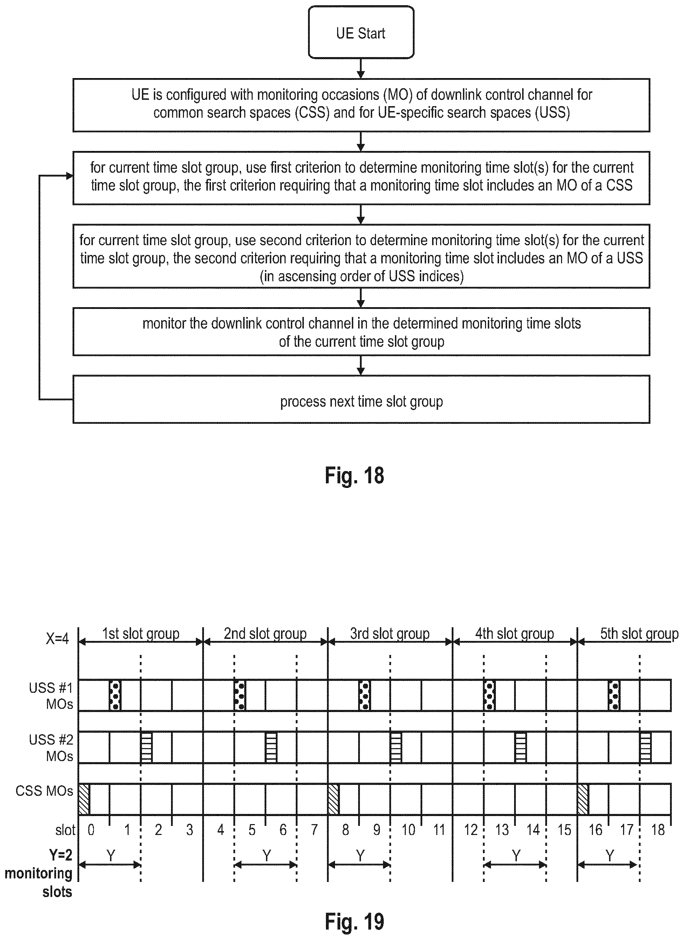

**Fig. 18** illustrates a flow diagram for an exemplary UE behaviour according to this first solution of the improved downlink control channel monitoring procedure. The illustrated UE behaviour assumes that the first criterion relating to the common search spaces is considered first before the second criterion relating to the UE specific search spaces. Furthermore, for the second criterion it is exemplarily assumed that the USS are considered in an ascending order of USS indices.

The first illustrated step of the UE behaviour shows that the UE is configured with the monitoring occasions of the downlink control channel (e.g. PDCCH) for CSS and USS.

Then, in order to be able to perform its monitoring function, the UE determines the monitoring time slots for each time slot group. In the present first solution, this step is performed for each time slot group separately. Correspondingly, the UE processes the current time slot group, and first uses the first CSS-based criterion and then the second USS-based criterion for the determination of the monitoring time slots. In case there are no CSS in the current time slot group, the UE proceeds to determine monitoring time slots that contain USS.

Although not illustrated in Fig. 18, the UE performs the two determination steps until the two monitoring slots are determined (considering the above mentioned exemplary assumption of Y = 2). The result of the two determination steps is two monitoring time slots including CSS MOs and/or USS MOs.

There can be cases where there is neither a CSS nor a USS for a monitoring time slot, such that the UE cannot determine a monitoring time slot including a CSS or USS. In such cases, the UE can determine no further monitoring time slot, because there are no further MOs to be monitored by the UE.

Alternatively, the UE can determine the remaining "nominal" monitoring time slot(s) within the time slot group (without any CSS or USS) but on a different basis, which could be unambiguous as well such that the corresponding determination at the gNB side results in the same monitoring time slots. In one example, the UE could select a time slot within the current time slot group that has the lowest (alternatively highest) possible slot index (but meeting all other constraints, e.g. monitoring time slots being consecutive).

In another example, the UE could select a time slot within the current time slot group that has the lowest (alternatively highest) possible slot index, but with the additional constraint that the selected time slot is not a time slot at the boundary of the time slot group (but meeting all other constraints, e.g. monitoring time slots being consecutive). In this example, such a determination would help avoiding the back-to-problem of consecutive monitoring time slots across boundaries of time slot groups.

In still another example, the monitoring time slots for each time slot group is determined only based on the first CSS-based criterion, even though a time slot group contains both CSS and USS. The scheduling node, e.g. gNB, by configuration, can guarantee that the number of slots containing CSS within a time slot group is no greater than the number Y. In case that the number of slots containing CSS within a time slot group is equal to the number Y, the monitoring time slots are fully determined by the first CSS-based criterion. On the other hand, if the number of slots containing CSS within a time slot group is smaller than the number Y, the above mentioned method to avoid unambiguity can be further applied (but not depending on the USS). For example, the monitoring slots are selected from the lowest possible slot index that are consecutive. The advantage of this example is that it becomes possible to align the location of Y for a group of UEs (if not for all UEs) since the monitoring time slots does not depend on USS anymore. In this way, the scheduling complexity is reduced because the scheduling possibility in time is limited to a small set of time slots (with a certain degree of sacrificing flexibility).

Another constraint or limitation that may have to be considered for the determination of the monitoring time slots relates to whether the monitoring time slots of a time slot group have to be consecutive with each other or not. The result of the determination can differ significantly depending on whether the monitoring time slots need to be consecutive or not. By allowing non-consecutive monitoring time slots within a time slot group, the flexibility of the determination is increased and this facilitates that the resulting monitoring time slots includes as many CSS and/or USS as possible. As a result, this facilitates that the gNB can use different radio resources for reaching the UE.

On the other hand, having consecutive monitoring time slots is advantageous for the UE's power saving because after monitoring the consecutive monitoring time slots, UE can go to sleep to reduce power consumption. On the other hand, if the monitoring time slots are non-consecutive, UE has to constantly ramp-up and ramp-down power if UE wants to sleep during the non-monitoring time slots, which increases the power consumption.

The UE can then monitor the downlink control channel in the thus determined monitoring time slots of the current time slot group. Conversely, the gNB is aware of the monitoring time slots monitored by the UE and can thus use these to transmit downlink control information to the UE.

Subsequently, the UE proceeds to process the next time slot group and again performs the above explained determination step based respectively on the first CSS-related criterion and the second USS-related criterion.

The above explained UE behaviour of Fig. 18 will be applied to different scenarios as illustrated in Fig. 19, 20, 21, and 22. While the explanations primarily relate how the UE performs the determination of the monitoring time slots, the explanations are equally applicable to the determination of the monitoring time slots at the base station side.

**Fig. 19** illustrates the configuration of a CSS and two USS (USS#1 and USS#2) of a UE.

In line with the UE behaviour of the first solution, as exemplarily illustrated in Fig. 18, the UE (and gNB) will determine that in the 1^{st} slot group the time slots 0 and 1 will be the two monitoring time slots. In particular, considering the first CSS-related criterion, the UE may first determine that slot 0 is to be a monitoring time slot, because slot 0 includes the CSS MO. Then, since there are no more CSS MOs in other time slots of said 1^{st} time slot group, the UE may then determine, considering the second USS-related criterion, that slot 1 is to be the second monitoring time slot, because slot 1 includes the USS with the lowest index. The UE cannot determine another monitoring time slot, because the number Y of monitoring time slots is 2, and thus the UE cannot monitor in time slot 2 for USS#2. Therefore, the relative location of the monitoring time slots for the 1^{st} time slot group includes the first and second time slots.

A separate determination of the monitoring time slots is performed by the UE and gNB for the 2^{nd} time slot group. In the 2^{nd} time slot group, there is no CSS, such that the UE proceeds to determine that the first monitoring time slot is slot 5 having the MO of USS#1 with the lower index. The second monitoring time slot is determined to be slot 6, which includes the MO for USS#2. Therefore, the relative location of the monitoring time slots for the 2^{nd} time slot group includes the second and third time slots.

For the 3^{rd} and 5^{th} time slot groups, the UE and gNB determine the same relative location of the monitoring time slots as for the 1^{st} time slot group, because of the same distribution of CSS and USS due to the respective periodicities. Consequently, for the 3^{rd} time slot group, the monitoring time slots are slots 8 and 9, and for the 5^{th} time slot group, the monitoring time slots are slots 16 and 17, i.e. respectively the first and second time slots.

For the 4^{th} time slot group, the UE and gNB determine the same relative location of the monitoring time slots as for the 2^{nd} time slot group, because of the same distribution of CSS and USS due to the respective periodicities. Consequently, for the 4^{th} time slot group, the monitoring time slots are slots 13 and 14, i.e. the second and third time slots.

As apparent from the example scenario of Fig. 19, the Y monitoring time slots in each time slot group may change per time slot group. In particular, for the 2^{nd} time slot group, the monitoring time slots are shifted by one time slot compared to the 1^{st} time slot group, due to the absence of a CSS MO in the first slot and due to the presence of a USS MO in the third time slot. Due to this flexibility in the determination, it is possible that the monitoring occasion of USS#2 can be monitored by the UE (and used for a DCI transmission by the gNB) at least in some time slot groups (here in every second time slot group). Further, the monitoring time slots are still determined to comprise the CSS where possible.

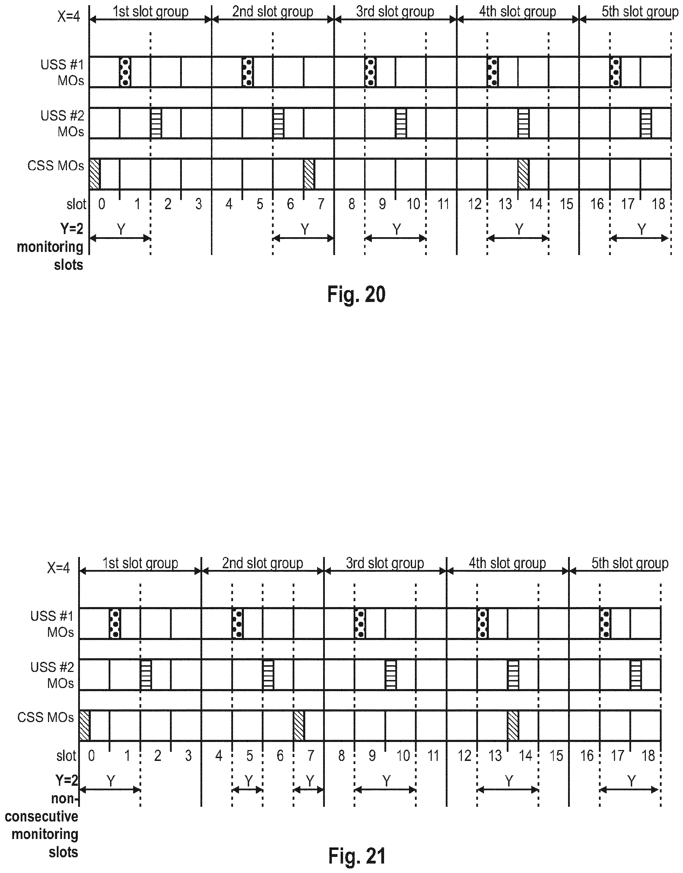

**Fig. 20** illustrates the configuration of a CSS and two USS (USS#1 and USS#2) of a UE, according to another scenario. It is exemplary assumed that the CSS occurs in slot 0 for the first time and occurs with a periodicity of 7 slots, that USS#1 occurs in slot 1 for the first time and occurs with a periodicity of 4 slots, and that USS#2 occurs in slot 2 for the first time and occurs with a periodicity of 4 slots. At the bottom of Fig. 20, the resulting Y=2 monitoring time slots are illustrated for each time slot group. Correspondingly, the main difference in the assumptions compared to the scenario of Fig. 19 is that the CSS has a different periodicity.

In line with the UE behaviour of the first solution, as exemplarily illustrated in Fig. 18, the UE (and gNB) will determine that in the 1^{st} slot group the time slots 0 and 1 will be the two monitoring time slots, in the same manner as explained for Fig. 19. On the other hand, the distribution of the CSS and USS is different in the 2^{nd} time slot group, and the resulting monitoring time slots are different too. In particular, considering the first CSS-related criterion, the UE may first determine that slot 7 is to be a monitoring time slot, because slot 7 includes the CSS MO. Then, since there are no more CSS MOs in other time slots of said 2^{nd} time slot group, the UE may then determine, considering the second USS-related criterion, that slot 6 is to be the second monitoring time slot. Although slot 5 includes the MO for USS#1, slot 5 cannot be selected as a monitoring time slot, because it would not be next to the first monitoring time slot 7 (i.e. would not be consecutive). Thus, time slot 6, including the MO for USS#2, is selected as the second consecutive monitoring time slot in the 2^{nd} time slot group. Overall, the monitoring time slots are consecutive time slots 6 and 7 of the 2^{nd} time slot group.

For the 3^{rd} time slot group, the determination results in the consecutive monitoring time slots 9 and 10. Since there is no CSS in said 3^{rd} time slot group, the UE proceeds to determine that the first monitoring time slot is slot 9 having the MO of USS#1 with the lower index. The second monitoring time slot is determined to be slot 10, which includes the MO for USS#2.

For the 4^{th} time slot group, the determination results in the consecutive monitoring time slots 13 and 14. In particular, considering the first CSS-related criterion, the UE may first determine that slot 14 is to be a monitoring time slot, because slot 14 includes the CSS MO; in this scenario, slot 14 also includes the MO for USS#2. Then, since there are no more CSS MOs in other time slots of said 4^{th} time slot group, the UE may then determine, considering the second USS-related criterion, that slot 13 is to be the second monitoring time slot, because it includes the MO for USS#1.

**Fig. 21** illustrates the configuration of a CSS and two USS (USS#1 and USS#2) of a UE, according to the same scenario as in Fig. 20. Thus, it is exemplary assumed that the CSS occurs in slot 0 for the first time and occurs with periodicity of 7 slots, that USS#1 occurs in slot 1 for the first time and occurs with a periodicity of 4 slots, and that USS#2 occurs in slot 2 for the first time and occurs with a periodicity of 4 slots. At the bottom of Fig. 21, the resulting Y=2 monitoring time slots are illustrated for each time slot group. The main difference however is that the monitoring time slots do not have to be consecutive. In other words, during the determination of the monitoring time slots, there is no additional constraint that requires the resulting monitoring time slots to be consecutive.

While the determination results in the same monitoring time slots in the 1^{st}, 3^{rd}, 4^{th}, and 5^{th} time slots groups (see Fig. 20), for the 2^{nd} time slot group, the UE and gNB determine non-consecutive monitoring time slots 5 and 7. In particular, as for Fig. 20, considering the first CSS-related criterion, the UE may first determine that slot 7 is to be a monitoring time slot, because slot 7 includes the CSS MO. Then, since there are no more CSS MOs in other time slots of said 2^{nd} time slot group, the UE may then determine, considering the second USS-related criterion. In this case, since non-consecutive monitoring time slots are allowed, the UE can determine the second monitoring time slot to be slot 5, including the MO for USS#1.

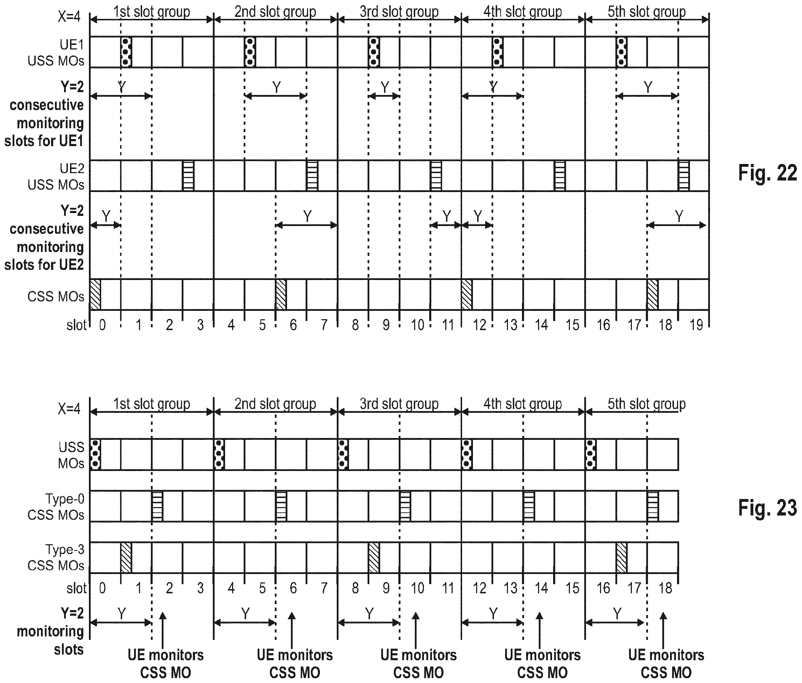

**Fig. 22** illustrates the configuration of CSS and USS for two different UEs, UE1 and UE2. In particular, it is exemplarily assumed that the CSS for both UEs occurs in slot 0 for the first time and occurs with a periodicity of 6 slots, that the USS for UE1 occurs in slot 1 for the first time and occurs with a periodicity of 4 slots, and that the USS for UE2 occurs in slot 3 for the first time and occurs with a periodicity of 4 slots. Fig. 22 then illustrates below the UE1 USS MOs the resulting Y=2 consecutive monitoring time slots for UE1, and below the UE2 USS MOs the resulting Y=2 consecutive monitoring time slots for UE2.

In the 1^{st} time slot group, in line with the UE behaviour of the first solution, as exemplarily illustrated in Fig. 18, UE1 (and the gNB) will determine that slots 0 and 1 will be the two monitoring time slots. The two monitoring time slots include the CSS MOs and the USS MOs of UE1.

In turn, UE2 and gNB will determine that slots 0 and 1 will be the two monitoring time slots. Here, UE2 first determines slot 0 to be a monitoring time slot, because slot 0 includes the CSS MOs. Then, using the second USS-related criterion, UE2 cannot select slot 3 as the second monitoring time slot, because it would not be consecutive to the previously-determined first monitoring time slot 0. Instead, slot 1 is selected as the second monitoring time slot because it is consecutive to the previously-selected slot 0 comprising the CSS MO. Thus, slot 1 could be defined to be a "nominal" monitoring time slot for UE2. However, since slot 1 does not contain any MO of the CSS or USS, effectively UE2 may not need to monitor in slots 1 of the 1^{st} time slot group because there is no MO configured to be monitored.

Alternatively (illustrated in Fig. 22), the UE2 may refrain from selecting a second monitoring time slot at all in said 1^{st} time slot group, because slot 1 does not include any MO for any CSS or USS. The UE has the opportunity in slot 1 to save power.

Overall, UE1 and UE2 happen to have the same monitoring time slots in the 1^{st} time slot group.

For the 2^{nd} time slot group, however, the resulting monitoring time slots for UE1 and UE2 are different. In particular, UE1 and gNB determine monitoring time slots 5 and 6 for UE1, and UE2 and gNB determine monitoring time slots 6 and 7 for UE2, respectively following the first and second criteria.

In the 3^{rd} time slot group, the resulting monitoring time slots for UE1 and UE2 are also different. UE1 and gNB determine time slot 9 to be the first monitoring time slot, because it includes the USS MO (and there is no CSS in the 3^{rd} time slot group). As the second monitoring time slot, time slots 8 and 10 are consecutive to the previously-selected first monitoring time slot 9 but both contain no MO for CSS or USS. According to one exemplarily implementation (not illustrated in Fig. 22), UE1 and gNB determine slot 8 as the second monitoring time slot, because it is the time slot with the lowest (lower) slot index. Alternatively, no further monitoring time slot is selected for UE1, such that in the 3^{rd} time slot group, there is only monitoring time slots 9 for UE1. These two behaviours would lead to the same result in the end, because gNB would not send any DCI using slot 8 for UE1.

Correspondingly, for UE2, it is exemplarily assume in Fig. 22 that UE2 and gNB determine only slot 11 to be a monitoring time slot.

In the 4^{th} time slot group, the resulting monitoring time slots for UE1 and UE2 are time slots 12 and 13, i.e. the same relative locations of the monitoring time slots of the 1^{st} time slot group.

In the 5^{th} time slot group, the resulting monitoring time slots for UE1 and UE2 are also different, in a same manner as in the 2^{nd} time slot group, already explained above.

As apparent from Fig. 22, different UEs can monitor the downlink control channel in different monitoring time slots, depending on the respective distribution of the CSS and USS in the different time slot groups. Thus, the flexibility of the gNB for transmitting information to the UEs is increased.

In further implementations, the first solution of the improved downlink control channel monitoring procedure can also use a different first criterion namely that a monitoring time slot includes a monitoring occasion associated with a common search among a reduced set of CSS. This was already explained in detail above for the improved downlink control channel monitoring procedure in connection with Fig. 14-17 and is equally applicable for the first solution. In summary, the reduced CSS set may include CSS that are not necessarily configured for all UEs, e.g. Type-1 CSS configured by a dedicated message to the UE and Type-3 CSS. The remaining CSS, not included in the reduced CSS set (those CSS configured commonly for all UEs, e.g. Type-1 CSS not configured in a dedicated message, Type-0 CSS, Type-OA CSS, and Type-2 CSS) could exemplarily be monitored by the UE in further monitoring opportunities within the time slot group outside the Y monitoring time slots. Conversely, the BS can transmit the remaining CSS in further monitoring opportunities within the time slot group outside the Y monitoring time slots, as defined by the corresponding monitoring occasions of the remaining CSS.

A corresponding exemplary scenario is illustrated in **Fig. 23**, where two different types of CSS are assumed, namely a Type-0 CSS with MOs in slot 2 and occurring with a periodicity of 4 slots, and Type-3 CSS with MOs in slot 1 and occurring with a periodicity of 8 slots. Furthermore, the UE is exemplarily assumed to have one USS with MOs in slot 0 and occurring with a periodicity of 4 slots.

With the assumed distribution of CSS and USS, the UE and gNB determine that in the 1^{st} time slot group, the first monitoring time slot is time slot 1, which includes the Type-3 CSS from the reduced CSS set of the first criterion. On the other hand, the UE would not consider time slot 2 part of the Y monitoring time slots, because the included MO belongs to a Type-0 CSS which is not included in the reduced CSS set of the first criterion. Rather, the UE determines slot 0 as the second monitoring time slot, following the second USS-related criterion.

However, in one example implementation, the remaining Type-0 CSS MO in slot 2 of the 1^{st} time slot group can still be monitored by the UE (if the UE is capable), although outside the Y monitoring slots, as illustrated in Fig. 23 (see "UE monitors CSS MO" in the respective third slot of each slot group).

For the 2^{nd} time slot group, the UE and gNB determine the monitoring slots to be time slots 4 and 5. In particular, since there is no MO of a CSS of the reduced CSS set of the first criterion, the UE proceeds to determine monitoring time slots according to the second USS-related criterion and thus determines time slot 4 as the first monitoring time slot. Time slot 5 could then be determined as the second of the two monitoring time slots, because it is the only time slot consecutive to the previously determined monitoring time slot 4, or no further monitoring time slot is determined. Again, in one example implementation, the UE could monitor the remaining Type-0 CSS MO in slot 6, although outside the Y monitoring slots, as illustrated in Fig. 23.

The determinations of the UE and gNB for the 3^{rd} and 5^{th} slot groups correspond to the one just explained for the 1^{st} slot group, and the determinations of the UE and gNB for the 4^{th} slot group correspond to the one just explained for the 2^{nd} slot group.

In another converse example, this reduced set of common search spaces includes only the common search spaces that are to be received by all UEs (served by a cell of the gNB), e.g. one or more of the Type1-PDCCH common search space that was not configured in a dedicated RRC message, the TypeO, TypeOA and Type2 common search spaces. This was already explained before the start of the first solution.

The above first solution and its variations and implementations have been primarily explained from the viewpoint of the UE. However, the above first solution and its variations and implementations are also applicable to the base station side, because the described determination of the monitoring slots can be performed in the very same manner in the UE and BS.

The BS and UE are different in the way the resulting monitoring time slots are used in the further processing, where the UE uses the monitoring time slots for the monitoring function (see Fig. 14) and the BS uses the monitoring time slots for the transmission of downlink control information (see Fig. 16).

### Second solution

A second solution of the improved downlink control channel monitoring procedure is based on the concept that the determining of the monitoring time slots is performed for a plurality of time slot groups together, e.g. the determining of the monitoring time slots is performed once, taking into account the monitoring occasions of the plurality of time slot groups, and the resulting common relative location of the monitoring time slots within a time slot group is applied commonly for each of the plurality of time slot groups.

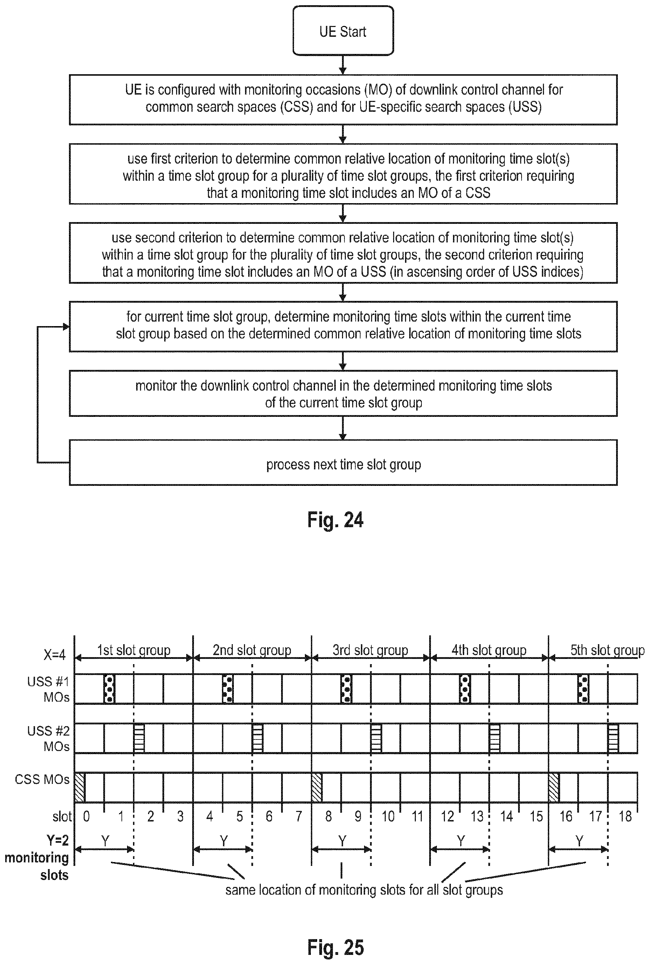

**Fig. 24** illustrates a flow diagram for an exemplary UE behaviour according to this second solution of the improved downlink control channel monitoring procedure and is based on similar assumptions as the UE behaviour explained in connection with Fig. 18. For instance, the illustrated UE behaviour again assumes that the first criterion relating to the common search spaces is considered first before the second criterion relating to the UE specific search spaces. Furthermore, for the second criterion it is exemplarily assumed that the USS are considered in an ascending order of USS indices. The UE is configured with the monitoring occasions of the downlink control channel (e.g. PDCCH) for CSS and USS. Then, in order to be able to perform its monitoring function, the UE determines the monitoring time slots for each time slot group.

However, rather than performing the determination process separately for each time slot group as in the first solution, the determination step according to the second solution is performed together for a plurality of time slot groups. In particular, the UE and gNB determine the most suitable location of the monitoring time slot(s) (i.e. one or more monitoring time slots) within a time slot group not for a single time slot group but for a plurality of time slot groups. In accordance therewith, the UE and gNB perform the determination not exclusively based on a single time slot group, but rather based on several time slot groups and their distribution of CSS and USS MOs therein.

According to this second solution, the UE and gNB determine the common relative location of one or more monitoring time slots within a time slot group trying to comply with the first CSS-related criterion (e.g. a monitoring time slot shall include an MO of a CSS if possible) across several time slot groups. For instance, the UE and gNB may first consider the several time slot groups and particularly which time slots contain an MO for a CSS and then determine that relative position of a time slot that contains a CSS MO as the monitoring time slot (even if for some time slot group the time slot at the relative position does not contain a CSS MO). This determined relative position thus corresponds to the first monitoring time slot. If more than one MO of different CSS are available, the UE may consider to determine a further different relative position within a time slot group as corresponding to the second monitoring time slot, and so on.

Then, if further monitoring time slots need to be determined (e.g. the number Y of monitoring time slots is not yet reached, after having applied the first criterion), the UE and gNB may proceed to determine a common relative location of one or more monitoring time slots within a time slot group trying to comply with the second USS-related criterion (e.g. a monitoring time slot shall contain an MO of USS, optionally in an ascending order of USS indices) across several time slot groups. For instance, the UE and gNB may first consider the several time slot groups and particularly which time slots contain an MO for a USS and then determine that relative position of a time slot that contains a USS MO as the monitoring time slot (even if for some time slot group the time slot at the relative position does not contain a USS MO). This determined relative position thus corresponds to another monitoring time slot, in addition to the ones previously determined based on the first criterion. If more than one MO of different USS are available, the UE may consider to determine a further different relative position within a time slot group as corresponding to a still further monitoring time slot, and so on.

As a result of the above determinations, the UE and gNB have Y common relative locations of a monitoring time slot within a time slot group, e.g. the first and second time slot, of a time slot group having 4 time slots in total, are monitoring time slots.

Subsequently, the UE and gNB can determine the actual monitoring time slots for specific time slot groups, which can be done per time slot group. As apparent from **Fig. 24**, the UE and gNB determine for a current time slot group, the actual monitoring time slots within that time slot group based on the previously determined common relative position of monitoring time slots, e.g. the first and second time slots of that current time slot group are the monitoring time slots to be monitored by the UE.

The UE can then monitor the downlink control channel in the thus determined monitoring time slots of the current time slot group. Conversely, the gNB is aware of the monitoring time slots monitored by the UE and can thus use these to transmit downlink control information to the UE.

Subsequently, the UE and gNB proceed to process the next time slot group and again perform the above explained determination step of the monitoring time slots for the next time slot group. However, instead of re-determining the common relative position of monitoring time slots, the UE and gNB can simply apply again the same previously determined common relative position of monitoring time slots, this time to time slots of the new time slot group.

The above-explained UE behaviour of Fig. 24 will now be explained in connection with an exemplary scenario illustrated in Fig 25. While the explanations primarily relate how the UE performs the determination of the monitoring time slots, the explanations are equally applicable to the determination of the monitoring time slots at the base station side.

Fig. 25 illustrates the configuration of a CSS and two USS (USS#1 and USS#2) of a UE, having the same distribution as the scenario assumed for Fig. 19. It is exemplary assumed that the CSS occurs in slot 0 for the first time and occurs with periodicity of 8 slots, that USS#1 occurs in slot 1 for the first time and occurs with a periodicity of 4 slots, and that USS#2 occurs in slot 2 for the first time and occurs with a periodicity of 4 slots. At the bottom of Fig. 25, the resulting Y=2 monitoring time slots are illustrated for each time slot group. As apparent therefrom, the Y monitoring time slots are determined by the UE and gNB following the first and second criteria already explained in detail with respect to the first solution. Thus, for instance the UE and gNB determine that the first and second time slots within a time slot group as the common relative position, because the first time slot contains the CSS MO (see e.g. 1^{st}, 3^{rd}, 5^{th} time slot groups) and because the second time slot contains the USS#1 MO (see all time slot groups). As illustrated in Fig. 25, the common relative location of monitoring time slots, i.e. in this case the first and second time slots, are the applied to all time slot groups, resulting in the actual monitoring time slots 0 and 1 of the 1^{st} time slot group, in the actual monitoring time slots 4 and 5 of the 2^{nd} time slot group, in the actual monitoring time slots 8 and 9 of the 3^{rd} time slot group, etc. This results in the same relative location of monitoring time slots in all time slot groups.

The determination of the monitoring time slots according to the second solution can be implemented in different manners. Two exemplary variants thereof will be explained in the following. In brief, a first variant is based on the prior determination of a reference time slot group among the plurality of time slot groups, wherein the determination of the monitoring time slots (or more specifically the relative common locations of monitoring time slots) within said reference time slot group can be performed following the same principles as described in detail for the first solution. A second variant does not rely on a reference time slot group but rather determines the relative location of the monitoring time slots by applying the first and second criteria to the MOs of the plurality of time slot groups.

In more detail, according to the first variant of the second solution, the UE and gNB first determine a reference time slot group among the plurality of time slot groups, based on the current configuration of the MOs of CSS and USS. The reference time slot group can be determined in different manners, e.g.
- as the first time slot group among the plurality time slot groups, or
- as the first time slot group among the plurality of time slot groups that contains a common search space, or
- as that time slot group which contains the most of common search spaces and UE-specific search spaces among the plurality of time slot groups within the fewest time slots.

Other ways of determining the reference time slot group are also possible.

Then, after having determined a reference time slot group, the UE and gNB can perform the determination of the monitoring time slots based on that reference time slot group as being representative for the plurality of time slot groups. This determination with respect to the reference time slot group can be performed according to any one of the implementations explained in connection with the first solution above, for example as explained for Fig. 19-23 (but not limited to only these examples). In order to avoid repetitions, the corresponding explanations for the first solution are to be considered as being included and applicable here for the first variant of the second solution.

As a result of the first variant, the UE and gNB have determined Y (or less) common relative locations of a monitoring time slot within the reference time slot group.

Subsequently, the UE and gNB can determine the actual monitoring time slots for all the time slot groups, which can be done per time slot group based on said Y common relative locations of monitoring time slots, previously determined on the basis of the reference time slot group.

Moreover, according to the second variant of the second solution, the UE and gNB consider the first and second criterion for the monitoring occasions of CSS and USS for a plurality of time slot groups, based on the current configuration of the MOs of CSS and USS.

According to one exemplary implementation, the UE can take into account the MOs of a plurality of time slot groups, e.g. all the time slot groups up to a maximum periodicity, where the distributions of the CSS and USS begin to repeat in the time slot groups. For instance, in the exemplary scenario of Fig. 25, the plurality of time slot groups to be considered is two time slot groups (e.g. 1^{st} and second time slot groups), because the 3^{rd} time slot group repeats the CSS/USS distribution of the 1^{st} time slot group and the 4^{th} time slot group repeats the CSS/USS distribution of the 2^{nd} time slot group, etc.

In other scenarios, the maximum periodicity is higher and thus the plurality of time slots groups as the basis of the determination increases. For instance, in the scenario of Fig. 21 the maximum periodicity is 7 time slot groups, due to the periodicity of 7 slots of the CSS MOs.

Among this plurality of time slot groups, the UE and gNB then determine those time slots of any time slot group, which contain a CSS MO, and determine the relative position of those time slots as the common relative position of the monitoring time slots.

Then, among this plurality of time slot groups, the UE and gNB determine those time slots of any time slot group, which contain a USS MO (optionally, in an ascending order of USS indicates, i.e. first USS#1, then USS#2...), and determine the relative position of those time slots as the common relative position of the monitoring time slots.

As presented before, the above steps of the second variant of the second solution are to be applied as long as there are still monitoring time slots to be determined, i.e. before reaching the number Y.

As a result of the second variant, the UE and gNB have Y common relative locations of a monitoring time slot, basically in the same manner as for the first variant. Subsequently, the UE and gNB can then determine the actual monitoring time slots for all the time slot groups, which can be done per time slot group based on said Y common relative locations of monitoring time slots.

One specific and exemplary implementation of the second variant of the second solution can be defined based on the following algorithm. The maximum periodicity of all configured MOs is known to the UE, and the UE can check all the slot groups up to the maximum periodicity by the following steps:
1. Would any CSS MO occur in the first slot in any of the slot groups? If yes, the Y monitoring time slots must include the first slot.
2. Would any CSS MO occur in the second slot in any of the slot groups? If yes, the Y monitoring time slots must include the second slot.
3. Repeat the above procedure for all CSS MOs and USS MOs, until number of slots of Y (e.g. 2 slots) is reached.

As will become apparent from below, applying the first and second variant may result in the same or different monitoring time slots depending on the MO configuration. For illustration purposes, the above presented first variant and second variant of the second solution will be explained in connection with the scenario of Fig. 25, already explained before.

As will become apparent, both first and second variants of the second solution may result in the same Y monitoring time slots illustrated in Fig 25. According to the first variant, the UE and gNB would first determine a reference time slot group. In the example scenario of Fig. 25, the UE and gNB could determine for instance the 1^{st} time slot group as the reference time slot group, following one of the above presented conditions. The 1^{st} time slot group is the first one among the plurality time slot groups, and is also the first time slot group among the plurality of time slot groups that contains a common search space, and is also that time slot group which contains the most (here two) of common search spaces and UE-specific search spaces among the plurality of time slot groups within the fewest time slots. When applying the first and second criterion sequentially on the reference time slot group, i.e. 1^{st} time slot group of Fig. 25, the UE and gNB would determine the first and second time slots thereof as representing the common relative locations of monitoring time slots.

On the other hand, according to the second variant, the UE and gNB would determine among the MOs of the 1^{st} and 2^{nd} time slot groups (as the plurality of time slot groups) the monitoring time slots. Following the first CSS-related criterion, the CSS MO is located in the first time slot of the 1^{st} time slot group, such that the first time slot will be determined to constitute the first common relative position of a monitoring time slot. Since there are no further CSS in the 1^{st} and 2^{nd} time slot groups, the UE would proceed based on the second USS-related criterion and would determine that USS#1 is located in the second time slot of the 1^{st} time slot group (also of the 2^{nd} time slot group). Thus, the second time slot will be determined to constitute the second common relative position of a monitoring time slot.

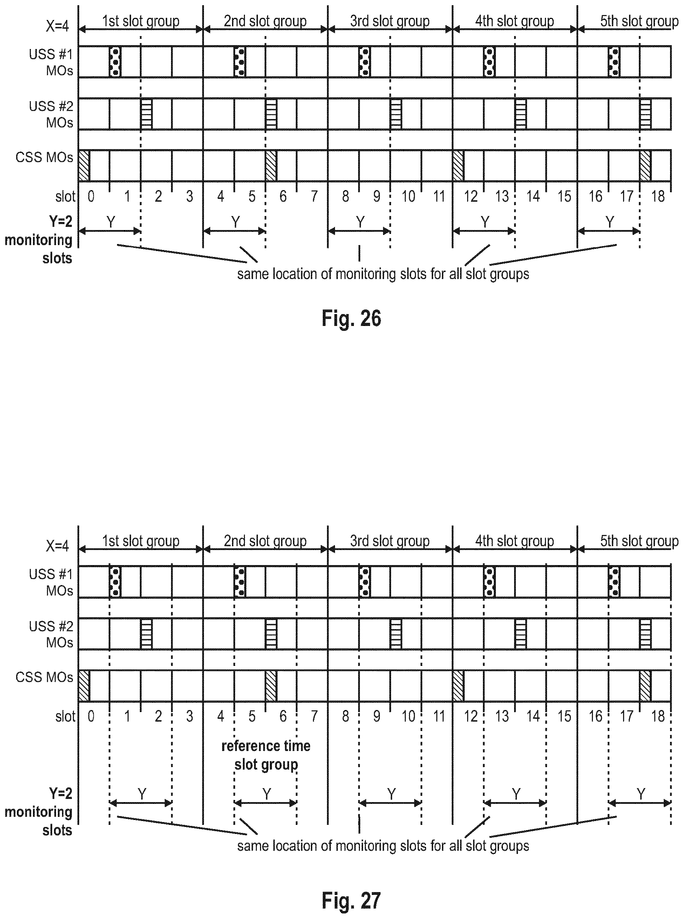

With reference to Fig. 26 and 27, it will be explained that the first and second variants of the second solution may also result in different monitoring time slots. **Fig. 26** illustrates the configuration of a CSS and two USS (USS#1 and USS#2) of a UE. It is exemplary assumed that the CSS occurs in slot 0 for the first time and occurs with periodicity of 6 slots, that USS#1 occurs in slot 1 for the first time and occurs with a periodicity of 4 slots, and that USS#2 occurs in slot 2 for the first time and occurs with a periodicity of 4 slots. At the bottom of Fig. 26, the resulting Y=2 monitoring time slots are illustrated after having performed the second variant of the second solution.

For instance, in line with the principles of the second variant of the second solution, the UE and gNB determine that the first time slot is a common relative location of a monitoring slot, because it contains the MOs for the CSS. Although the third time slot also contains the MOs for the CSS e.g. in the 2^{nd} time slot group, the third time slot would not be consecutive and is thus not selected for a monitoring time slot. Instead, the UE and gNB determine that the second time slot (e.g. of the 1^{st} time slot group) contains MOs of USS#1, and thus determines the second time slot as a common relative location of a monitoring time slot. The resulting Y time slots, i.e. the first and second time slots of each time slot group, are illustrated at the bottom of Fig. 26.

**Fig. 27** illustrates the same configuration of a CSS and two USS (USS#1 and USS#2) of a UE as in Fig. 26. On the other hand, the resulting Y monitoring time slots are the second and third time slots and thus different from the result according to the second variant explained above for Fig. 26. In line with the principles of the first variant of the second solution, the UE and gNB determine the 2^{nd} time slot group as the reference time slot group, because it is the time slot group which contains the most of CSS and USS (here 3) in the fewest time slots (here 2); the 1^{st} time slot group also has 3 CSS and USS but distributed over 3 time slots. Applying the first and second criteria on the reference time slot group results in that the second and third time slots of said reference time slot group are determined by the UE and gNB as the common relative locations for the monitoring time slots. Correspondingly, the same common relative locations are applied to all time slot groups.

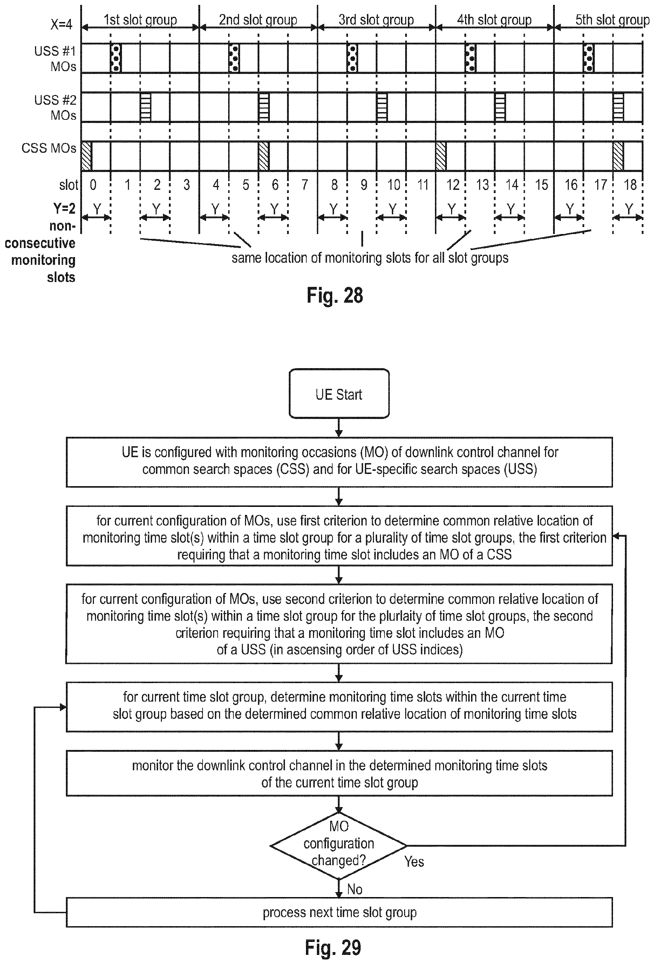

**Fig. 28** illustrates the same configuration of a CSS and two USS (USS#1 and USS#2) of a UE as in Fig. 26 and 27. However, the determination of the monitoring time slots is here assumed to allow non-consecutive monitoring slots, which may significantly influence the determination of the common relative locations of monitoring time slots. In the present example of Fig. 28, it was assumed that the UE and gNB perform the second variant of the second solution. Correspondingly, the UE first determines that the first time slot (of e.g. the 1^{st} time slot group) comprises a CSS MO and thus determine same to be common relative location of a monitoring time slot. It is further determined that the third time slot is a common relative location of a monitoring time slots, because the third time slot (e.g. of the 2^{nd} time slot group) also comprises a CSS MO. There is no constraint that the thus resulting locations of monitoring time slots need to be consecutive, such that the Y monitoring time slots will be the first and third time slots of every time slot group.

In the above implementations of the second solution it was simply assumed that the determination is determined only once and then used for all the plurality of time slot groups. However, in further implementations of the second solution, the previously determined common relative location of monitoring time slots is applied to the time slot groups until the configuration of the monitoring occasions changes. The common relative location of the monitoring time slots was determined on the basis of the current configuration of MOs (see above). Thus, it is advantageous to adapt the common relative location of the monitoring time slots to any new MO configuration so as to arrive at the most suitable monitoring locations for the current MO configuration.

In particular, the UE and gNB determine whether the currently used configuration of MOs of the UE is or has changed. In case the MO configuration has not changed, the UE and gNB keep using the previously-determined common relative locations of the monitoring time slots.

On the other hand, in case the MO configuration is or has changed, the UE and gNB may need to re-determine the common relative locations of the monitoring time slots, following any one of the implementations of the second solution, e.g. as explained already in detail above.

This behaviour is illustrated for the UE side in **Fig. 29**, which is quite similar to the one of Fig. 24. Fig. 29 additionally specifies that the two steps of determining the common relative location of monitoring time slot(s) is done for and based on the current configuration of MOs. The UE behaviour also includes the above-explained check as to whether the MO configuration has changed or not. If yes (i.e. MO configuration changed), the UE behaviour goes back to re-determine the common relative location of the monitoring time slot(s) for the then-new MO configuration (then considered the "current configuration of MOs" after the MO configuration change).

Such an implementation may have the advantage that the complexity to determine the monitoring time slots is reduced, because the location of the Y monitoring time slots does not have to be determined per time slot group and does not necessarily change per time slot group. Furthermore, the implementation maintains a flexibility to adapt the monitoring time slots to a new situation, because the monitoring time slots are re-determined when the MO configuration changes.

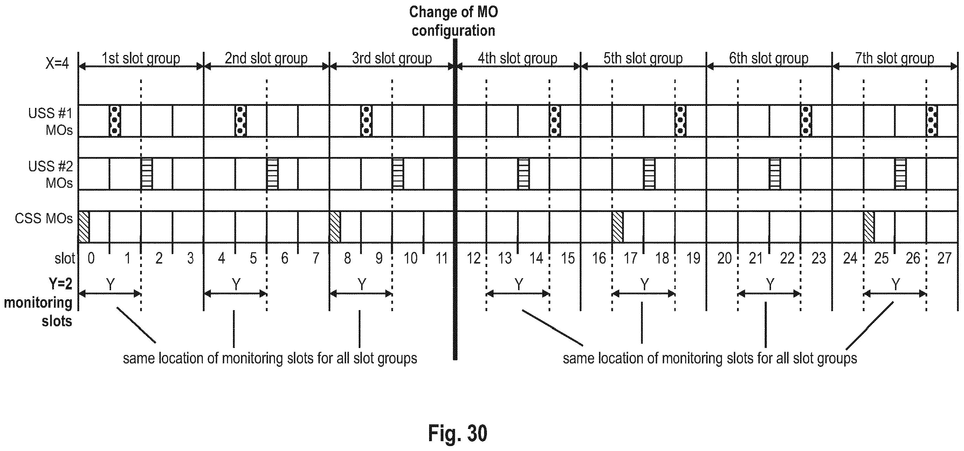

Fig. 30 illustrates two different configurations of CSS and two USS (USS#1 and USS#2) of a UE, and then illustrates at the bottom how the change of MO configuration results in respectively different monitoring time slots before and after the MO configuration change.

It is assumed that the MO configuration before the change results in common relative locations of monitoring time slots, being the first and second time slots of each time slot group. The determination could be the same as explained in detail already for Fig. 25.

It is further assumed that the MO configuration after the change results in different common relative locations of monitoring time slots, specifically being the second and third time slots of each time slot group. The determination takes the second time slot of a time slot group for the monitoring due to the CSS in slot 17 of the 5^{th} slot group (i.e. second time slot in said 5^{th} time slot group). Furthermore, the third time slot is selected for monitoring because it comprises USS#2 and complies with the constraint that the monitoring time slots have to be consecutive.

In the following different implementations of the above step of determining whether the MO configuration has changed will be explained.

According to a first implementation, the MO configuration is considered changed when configuration information for configuring the MOs is received at the UE from the serving base station, respectively transmitted by the serving base station. For instance, a new MO configuration can be indicated by an RRC message, e.g. in the context of configuration search spaces and the control resource set. Such a reconfiguration of the MOs can occur for instance when the UE changes its monitored beam for DL reception, and the serving base station can inform the UE on the new MO configuration suitable for the DL serving beam from gNB.

According to a second implementation, the MO configuration is considered changed, in case the UE switches from a current serving beam to a new serving beam for receiving the downlink control channel from a serving base station. Further, the UE determines the MO configuration based on the beam used for receiving the downlink control channel and based on stored configuration information. The stored configuration information includes information associating different beams with configuration of different MOs. Correspondingly, a direct re-configuration of the MOs by a message from the serving base station is not necessary, but the UE can determine its new beam-specific MOs autonomously based on configuration information stored in advance (e.g. pre-configured by the serving base station).

Whether the UE switches its beam can be e.g. indicated by the serving base station. Thus, when the UE receives such a beam change indication, the UE determines the new MO configuration and then re-determines the new monitoring time slots for said new MO configuration as explained above. In a 5G-compliant solution, a TCI (Transmission Configuration Indicator) can be used as the serving beam change indication.

Alternatively, during the initial access, UE selects the best SSB as the serving beam and reports it to the gNB via the sending Msg1 using corresponding RACH resources. After receiving Msg1, gNB would know which beam is the serving beam preferred by the UE and would use such beam as the UE serving beam throughout the whole initial access procedure. After RRC connection is established, it is possible for UE to send beam measurement report to gNB to indicate other serving beam candidates. Then gNB can decide whether to switch UE's serving beam and if so, send beam switching indication such as TCI to the UE.

In the above implementations it was simply assumed that any change of the MO configuration would lead to a re-determination of the monitoring time slots. However, it is also possible that the change of MO configuration is such that in effect no re-determination of the monitoring time slots is needed. According to other implementations, only MO configuration changes that lead to a MOs being included in different time slots than according to the previous MO configuration would trigger a re-determination of the monitoring time slots.

In particular, the change of the configuration of the monitoring occasions may refer to many different configuration items such as:
- a number of monitoring occasions is changed,
- a periodicity of the monitoring occasions is changed,
- a timing of an OFDM symbol of the monitoring occasions is changed,
- a timing of a time slot of the monitoring occasions is changed,
- an aggregation level of the monitoring occasions is changed,
- a number of monitoring candidates per aggregation level is changed.

As apparent from this list of possible changes in the MO configuration, some of these changes would not necessarily result in a change of the time slots, e.g. regarding the number of MOs, regarding the OFDM symbol timing, regarding the aggregation level and the number of monitoring candidates per aggregation level.

Therefore, another implementation of the second solution includes an additional step of determining whether the change of the configuration of the monitoring occasions results in a different time slot of any monitoring occasion compared to the previous configuration of the monitoring occasion. Correspondingly, in case it does result in a different time slot of any monitoring occasion, the MO configuration is indeed considered to have changed, and the UE and the gNB proceed to re-determine the monitoring slots based on the changed MO configuration. Conversely, in case the MO configuration change does not result in a different time slot of any monitoring occasion, the MO configuration change is considered not effective, and thus the UE and the gNB keep using the old monitoring time slots.

In further implementations, the second solution of the improved downlink control channel monitoring procedure can also use a different first criterion namely that a monitoring time slot includes a monitoring occasion associated with a common search among a reduced set of CSS. This was already explained in detail above for the improved downlink control channel monitoring procedure in connection with Fig. 14-17 and is equally applicable for the second solution. In summary, the reduced CSS set may include CSS that are not configured for all UEs, e.g. Type-1 CSS configured by a dedicated message to the UE and Type-3 CSS. The remaining CSS, not included in the reduced CSS set (those CSS configured commonly for all UEs, e.g. Type-1 CSS not configured in a dedicated message, Type-0 CSS, Type-OA CSS, and Type-2 CSS) could exemplarily be monitored by the UE in further monitoring opportunities within the time slot group outside the Y monitoring time slots. Conversely, the BS can transmit the remaining CSS in further monitoring opportunities within the time slot group outside the Y monitoring time slots, as defined by the corresponding monitoring occasions of the remaining CSS.

The above second solution and its variations and implementations have been primarily explained from the viewpoint of the UE. However, the above second solution and its variations and implementations are also applicable to the base station side, because the described determination of the monitoring slots can be performed in the very same manner in the UE and BS.

The BS and UE are different in the way the resulting monitoring time slots are used in the further processing, where the UE uses the monitoring time slots for the monitoring function (see Fig. 14) and the BS uses the monitoring time slots for the transmission of downlink control information (see Fig. 16).

### Variations of above solutions

In the following, different variations of the general solution (see e.g. Fig. 13-17) and the first (see e.g. Fig. 18-23) and second (see e.g. Fig. 24-30) solutions discussed above will be presented.

In the different implementations of the improved downlink control channel monitoring procedure explained above and below, e.g. in connection with the first and second solutions, the number X of time slots within each time slot group was assumed exemplarily to be 4 slots. However, the general invention and the first and second solutions are not limited in said respect, and the number X of time slots within each time slot group can also take another number, such as 2, 3, 5, 6 7, 8, 9, and so on.

In an exemplary implementation, the number X of time slots in each time slot group could be for instance determined based on a subcarrier spacing used for the downlink control channel and based on corresponding information stored at the UE and gNB. The stored information could be configured by the base station or could be pre-configured in the sense that it is fixed by a 3GPP standard. In one example, the stored information includes an association of different subcarrier spacings with one or more of different number of time slots. It may for instance be assumed that the number X of time slots in a time slot group is 4 for a subcarrier spacing of 480 kHz and is 8 for a subcarrier spacing of 960 kHz.

In the different implementations of the improved downlink control channel monitoring procedure explained above and below, e.g. in connection with the first and second solutions, the number Y of monitoring time slots within a time slot group was assumed exemplarily to be one or two slots. However, the general invention and the first and second solutions are not limited in said respect, and the number of Y monitoring time slots within each time slot group can also take another number, which however should be smaller than the number X of time slots in each time slot group so as to allow the UE to save power; e.g. 1<=Y<X. For instance, the number Y of monitoring time slots within a time slot group could be 1 or 2 for X=3, could be 1, 2, or 3 for X=4, could be 1, 2, 3, or 4 for X=5, and so on. In another exemplary implementation, the minimum number of monitoring time slots within a time slot group is 1 slot, and the maximum number of monitoring time slots within a time slot group is half of the number X of time slots in each time slot group, i.e. 1<=Y<X/2. In an exemplary implementation, the number Y of monitoring time slots within a time slot group can be determined from capability information stored in the UE, because it depends on the capability of how many times slots a UE can monitor (and process) within a certain time span. Correspondingly, in such a variant, the UE may transmit capability information of the number Y of monitoring time slots within a time slot group to a serving base station serving the UE, such that the serving base station has the same information as the UE and can accordingly determine the monitoring time slots in the same manner.

In the different implementations of the improved downlink control channel monitoring procedure explained above and below, e.g. in connection with the first and second solutions, it was simply assumed that the UE is already configured with different monitoring occasions for different search spaces as part of the monitoring function. In one exemplary implementation, the configuration of the monitor function can be implemented by using configuration information transmitted from the base station to the UE. The configuration information provides the necessary information for the UE to determine at least the one or more monitoring occasions in which the UE shall monitor the downlink control channel. According to one example compliant with the 5G NR standard, this configuration can be done based on the above discussed information elements *ControlResourceSet* and *SearchSpace,* as e.g. discussed above following the definitions in 3GPP TS 38.331 v16.5.0 section 6.3.2.

The different implementations of the improved downlink control channel monitoring procedure explained above and below, e.g. in connection with the first and second solutions, were explained as being generally performed at the UE and the gNB. On the other hand, in exemplary implementations, the improved downlink control channel monitoring procedure is primarily performed in specific scenarios, such as a scenario where a subcarrier spacing of the downlink control channel is higher than 120 kHz, e.g. 480 kHz or 960 kHz. In addition or alternatively, the improved downlink control channel monitoring procedure is primarily performed in the new frequency range above 52.6 GHz, e.g. the frequency range of 52.6 GHz to 71 GHz.

In the different implementations of the improved downlink control channel monitoring procedure explained above and below, e.g. in connection with the first and second solutions, there can be situations where a back-to-back problem occurs. The back-to-back problem is a situation with consecutive monitoring time slots across boundaries of time slot groups. The back-to-back problem can occur for the first and second solution.

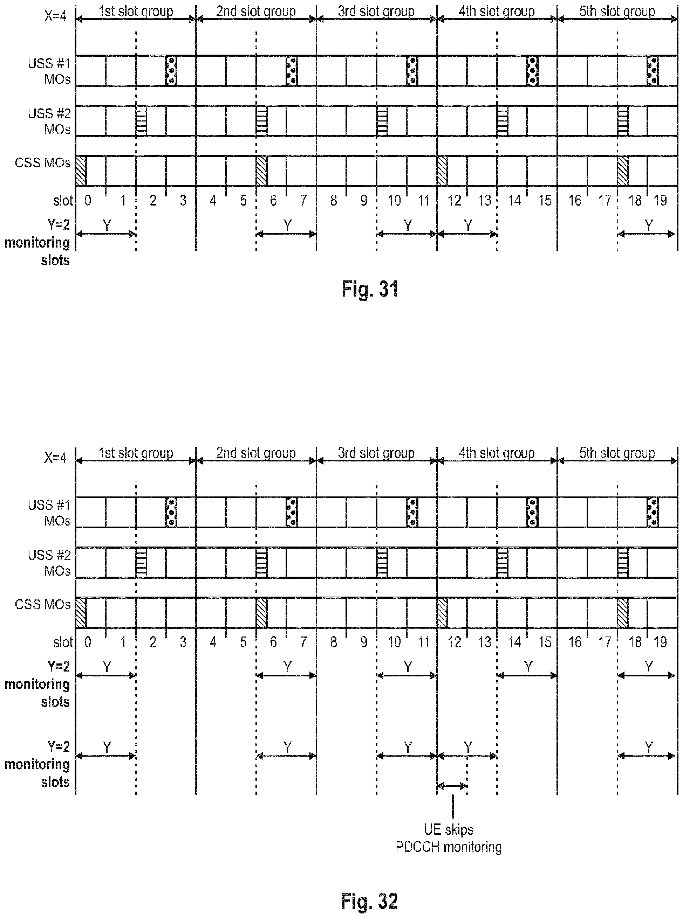

As exemplary scenario in which the back-to-back problem occurs is illustrated in **Fig. 31**, which exemplary assumes the configuration of a CSS and two USS (USS#1 and USS#2) of a UE. It is exemplary assumed that the CSS occurs in slot 0 for the first time and occurs with a periodicity of 6 slots, that USS#1 occurs in slot 3 for the first time and occurs with a periodicity of 4 slots, and that USS#2 occurs in slot 2 for the first time and occurs with a periodicity of 4 slots. In the illustration of Fig. 31 it is assumed that the monitoring time slots are determined according to an implementation of the first solution, explained above. A result of the determination of the Y monitoring slots for each time slot group is illustrated at the bottom of Fig. 31, namely monitoring time slots 0, 1 for the 1^{st} time slot group, monitoring time slots 6 and 7 for the 2^{nd} time slot group, monitoring time slots 10 and 11 for the 3^{rd} time slot group, and monitoring time slots 12 and 13 for the 4^{th} time slot group. Correspondingly, there is a back-to-back problem for the monitoring time slots 10-13 across the boundary of the 3^{rd} and 4^{th} time slot groups. Such an extended sequence of consecutive monitoring time slots is disadvantageous in that it demands a higher downlink control channel processing capability of the UE, possibly even higher than the UE is capable of.

The back-to-back problem can be solved in the following different manners.

According to a first implementation, an additional criterion is defined for determining the monitoring time slots, namely that a minimum time gap of one time slot is available between the monitoring time slots of two consecutive time slot groups. Put differently, the monitoring time slots are to be determined in such a manner that a minimum time gap of 1 time slot is between the last monitoring time slot of the n-th time slot group and the first monitoring time slot of the n+1th time slot group.

According to a second implementation, the determining of the monitoring time slots is not extended to consider the above third criterion, but may stay the same. Thus, the same monitoring time slots will be determined initially, including the back-to-back situation of the monitoring time slots, as e.g. illustrated in Fig. 31. However, the UE is exceptionally allowed to skip monitoring MOs in one of the two consecutive monitoring time slots involved in the back-to-back situation.

A third implementation is similar to the second implementation, but instead of skipping to perform the monitoring function of a complete monitoring time slot, the UE is exceptionally allowed to skip performing the monitoring function for a subset of monitoring occasions in one of the two consecutive monitoring time slots involved in the back-to-back situation.

**Fig. 32** illustrates the same CSS/USS configuration of a UE as in Fig. 31, but illustrates two different results of the determination of the monitoring time slots for solving the back-to-back problem. At the bottom of Fig. 32, the result of the above second implementation is illustrated, according to which the monitoring time slots are determined as before (see Fig. 31), but where the UE is exceptionally allowed to skip monitoring the time slot 12 (being the second time slot involved in the back-to-back situation).

In the second-to-last row of Fig. 32, the result of the above first implementation is illustrated, where the illustrated monitoring time slots are the result of additionally considering a third criterion where a minimum time gap of one time slot shall be available between the monitoring time slots of two consecutive time slot groups. Correspondingly, when determining the monitoring time slots for the 4^{th} time slot group, the UE and gNB may not select the time slot 12 as a monitoring time slot because it would violate the third criterion and would thus create the back-to-back problem. Instead, the time slots 14 and 15 will be determined as the monitoring time slots, because they include the MOs for USS#1 and USS#2. As apparent, the resulting monitoring time slots do not create the back-to-back problem.

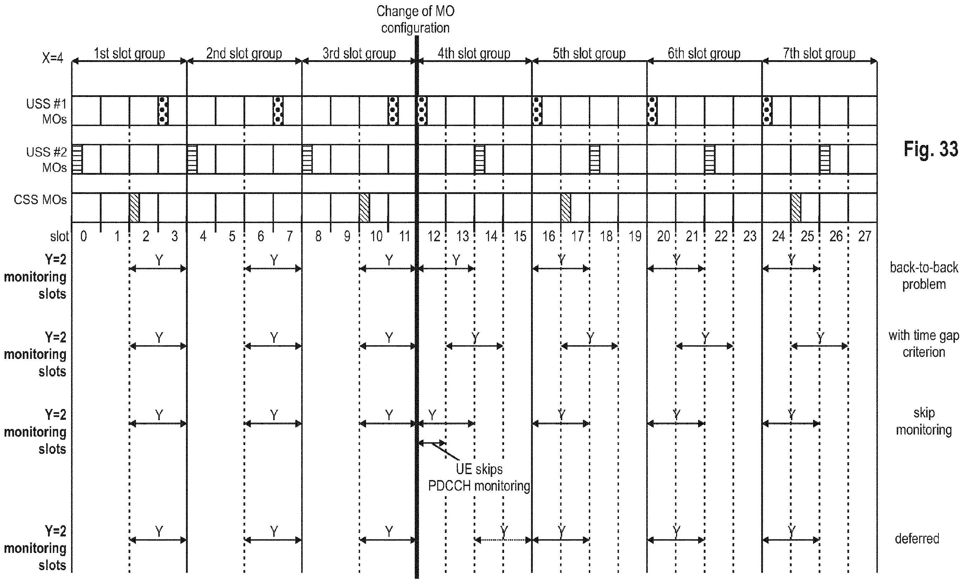

The back-to-back problem may also occur in the second solution, particularly at the boundary when the MO configuration is changed and as a result of the changed MO configuration when the monitoring time slots are changed. Such a situation is illustrated in **Fig. 33**. As apparent therefrom, the MO configuration is exemplarily assumed to change between the 3^{rd} and 4^{th} time slot groups. In particular, the MO configuration change involves a different location of the CSS MOs, which now occur in slot 17 for the first time (with a same periodicity of 8 slots), and involve a different location of the USS#1 MOs, which now occur in slot 12 for the first time (with a same periodicity of 4 slots), and involve a different location of the USS#2 MOs, which now occur in slot 14 for the first time (with a same periodicity of 4 slots).

Due to the particular distributions of the CSS/USS in the two different MO configurations, a back-to-back problem occurs at the monitoring time slots 10, 11, 12, and 13, which are consecutive and would require the UE to monitor and process the downlink channel 4 time slots in a row. This is illustrated in the uppermost row illustrating the Y monitoring slots (labelled "back-to-back problem").

The above first, second and third implementations explained for Fig. 32 to solve the back-to-back problem can also be applied for the scenario of Fig. 33.

In more detail, in line with the first implementation, the UE may determine different monitoring time slots for the subsequent MO configuration, by additionally taking into account that a minimum time gap of one time slot is available between the monitoring time slots of two consecutive time slot groups. The resulting monitoring time slots are illustrated in Fig. 33 in the second row of showing the Y monitoring time slots (labelled "with time gap criterion").The monitoring time slots are shifted by one time slot to be respectively the second and third time slots of each time slot group.

Moreover, in line with the second implementation, the UE may exceptionally be allowed to skip monitoring MOs in one of the two consecutive monitoring time slots involved in the back-to-back situation, and in the scenario of Fig. 33 the UE may skip the PDCCH monitoring for slot 12.This is apparent from the third row in Fig. 33 showing the Y monitoring time slots (labelled "skip monitoring").

In the illustrated second implementation of Fig. 33, the resulting monitoring slots (relative location of third and fourth time slot in a time slot group) is applied further in all subsequent time slot groups. This however might not be optimal for the subsequent time slot groups; e.g. in Fig. 33 the prioritized USS#1 MOs are not monitored by the UE. Therefore, according to a further variant of this second implementation, the third criterion is only applied to the first time slot group of the new MO configuration, and the normal determination of monitoring time slots according to the second solution is applied to the remaining time slot groups after the first time slot group of the new MO configuration.

Although not illustrated in Fig. 33, also the third implementation can be applied by the UE to avoid the back-to-back problem, specifically where the UE is exceptionally allowed to skip performing the monitoring function for a subset of monitoring occasions in one of the two consecutive monitoring time slots involved in the back-to-back situation. For instance, the MO for USS#1 is causing the back-to-back problem, and the UE may be allowed to skip monitoring the USS#1 MO in time slot 12; on the other hand, the USS#1 MO in subsequent time slot groups shall be monitored by the UE in line with the monitoring time slots occurring in the first and second time slot of each time slot group.

According to a still fourth implementation, the UE uses the old monitoring time slots for the first time slot group of the new MO configuration (e.g. in Fig. 33, for the 4^{th} slot group) and uses the new monitoring time slots only as of the second time slot group of the new MO configuration. Put differently, the using of the new monitoring time slots, determined based on the new MO configuration, is deferred by one time slot group. This is illustrated in Fig. 33 in the last row (labelled "deferred"), using a dotted arrow in the 4^{th} slot group to illustrate the Y monitoring slots. In the 4^{th} slot group, the UE thus monitors any MO within the monitoring time slots, e.g. here time slots 14 and 15 and particularly the USS#2 MOs. On the other hand, the USS#1 MOs are not monitored by the UE, because they are located outside the Y monitoring time slots..

### Further Aspects

According to a first aspect, a user equipment, is provided that includes the following. A processing circuitry of the UE determines, for a group of two or more time slots, one or more time slots in said time slot group to be monitored by the UE according to a monitoring function, wherein the monitoring function is operated by the UE for monitoring a downlink control channel in one or more monitoring occasions in one or more time slots for the purpose of receiving a downlink control information message. The processing circuitry performs the determining of the monitoring time slots within said time slot group in accordance with one or more of the following criteria:
- a first criterion according to which a monitoring time slot includes a monitoring occasion associated with a common search space of the downlink control channel,
- a second criterion according to which a monitoring time slot includes a monitoring occasion associated with a UE-specific search space of the downlink control channel.

Then, the processing circuitry monitors the downlink control channel in the determined one or more monitoring time slots of the time slot group.

According to a second aspect provided in addition to the first aspect, the first criterion relating to the common search space is considered first before the second criterion relating to the UE-specific search space, for the determining of the monitoring time slots within said time slot group.

According to a third aspect provided in addition to the first or second aspect, for the determining of the monitoring time slots, the processing circuitry considers the UE-specific search spaces in an order of priority, wherein the lower the index of a UE-specific search space, the higher is its priority for being included in a monitoring time slot.

According to a fourth aspect provided in addition to one of the first to third aspects, the first criterion is further defined as:
- a monitoring time slot includes a monitoring occasion associated with a common search space among a first set of common search spaces of the downlink control channel, wherein the first set of common search spaces does not comprise all common search spaces configured for the UE.

In an optional implementation, thereof, the first set of common search spaces includes common search spaces that are configured in a dedicated message to the UE and includes common search spaces that are configured commonly for a group of UEs, In a further optional implementation thereof, the first set of common search spaces includes common search spaces of Type-1 configured by a dedicated message to the UE and common search spaces of Type-3, according to 5G communication systems.

According to a fifth aspect, provided in addition to the fourth aspect, the processing circuitry, when in operation, monitors common search spaces that do not belong to the first set of common search spaces in additional monitoring time slots of the time slot group different from the monitoring time slots of the time slot group.

According to a sixth aspect, provided in addition to one of the first to fifth aspects, the UE is allowed to not monitor the downlink control channel in time slots of the time slot group that are not the monitoring time slots.

According to a seventh aspect provided in addition to one of the first to sixth aspects, the determining of the monitoring time slots is performed for each time slot group separately.

According to an eighth aspect provided in addition to one of the first to sixth aspects, the determining of the monitoring time slots is performed for a plurality of time slot groups together. The determining results in a common relative location of the monitoring time slots within each time slot group of the plurality of time slot groups. The processing circuitry, when in operation, applies the determined common relative location of the monitoring time slots for determining the monitoring time slots for each of the plurality of time slot groups. In an optional implementation, the determining of the monitoring time slots based on the common relative location of the monitoring time slots is performed until the configuration of the monitoring occasions changes.According to a ninth aspect provided in addition to the eighth aspect, the processing circuitry, when in operation, determines whether the configuration of the monitoring occasions changes. In case it is determined that the configuration of the monitoring occasions changes, the processing circuitry, when in operation, performs the determining of the monitoring time slots again for another plurality of time slot groups that are after the change of the configuration of the monitoring occasions, according to the changed configuration of the monitoring occasions. The determining results in another common relative location of the monitoring time slots within each time slot group of the other plurality of slot groups. Furthermore, the processing circuitry, when in operation, applies the determined other common relative location for determining the monitoring time slots for the other plurality of time slot groups after the change of the configuration of the monitoring occasion.

According to a tenth aspect provided in addition to the eighth or ninth aspect, the determining of the monitoring time slots is performed based on a reference time slot group among the plurality of time slots groups. The processing circuitry, when in operation, determines the reference time slot group as that time slot group that:
- is the first time slot group among the plurality of time slot groups,
- is the first time slot group among the plurality of time slot groups that contains a common search space, or
- contains the most of common search spaces and UE-specific search spaces among the plurality of time slot groups within the fewest time slots

According to an eleventh aspect, provided in addition to the eighth or ninth aspect, the determining of the monitoring time slots is performed considering the monitoring occasions of the plurality of time slot groups. In an optional implementation thereof, for the determining of the monitoring time slots for the plurality of time slot groups, the processing circuitry considers the first criterion and the second criterion for the monitoring occasions of the plurality of time slot groups.

According to a twelfth aspect, provided in addition to any one of the eighth to eleventh aspects, the processing circuitry, when in operation, determines that the configuration of the monitoring occasions changes, in case a receiver of the UE, when in operation, receives configuration information from a serving base station for configuring the monitoring occasions. In an optional implementation thereof, the configuration information for the monitoring occasions is received in a message of the Radio Resource Control, RRC, protocol.

According to a thirteenth aspect, provided in addition to any one of the eighth to twelfth aspects, the processing circuitry, when in operation, determines that the configuration of the monitoring occasions changes, in case the UE switches from a current beam to a new beam for receiving the downlink control channel from a serving base station. In an optional implementation thereof, the processing circuitry, when in operation, determines the monitoring occasions based on the beam used for receiving the downlink control channel from the serving base station and based on stored configuration information. The stored configuration information includes different configuration information associated with different beams for configuring beam-specific monitoring occasions. In an optional implementation thereof, the processing circuitry, when in operation, determines that the UE is to switch from the current beam to the new beam based on an indication received from the serving base station.

According to a fourteenth aspect, provided in addition to any one of the eighth to thirteenth aspects, the change of the configuration of the monitoring occasions includes one or more of:
- a number of monitoring occasions is changed,
- a periodicity of the monitoring occasions is changed,
- a timing of an OFDM symbol of the monitoring occasions is changed,
- a timing of a time slot of the monitoring occasions is changed,
- an aggregation level of the monitoring occasions is changed,
- a number of monitoring candidates per aggregation level is changed.

In an optional implementation, the processing circuitry, when in operation, further determines whether the change of the configuration of the monitoring occasions results in a different time slot of any monitoring occasion compared to the previous configuration of the monitoring occasion. In case it does result in a different time slot of any monitoring occasion, the processing circuitry determines that the configuration of the monitoring occasions has changed for the purpose of whether or not to again perform the determining of the monitoring slots. In case it does not result in a different time slot of any monitoring occasion, the processing circuitry determines that the configuration of the monitoring occasions has not changed for the purpose of whether or not to again perform the determining of the monitoring slots.

According to a fifteenth aspect, provided in addition to any one of the first to fourteenth aspects, time slots are grouped into a plurality of time slot groups, wherein the time slot groups are consecutive and non-overlapping in time, wherein each time slot group includes X time slots. In an optional implementation thereof, the processing circuitry, when in operation, determines the number X of time slots in each time slot group from information stored in the UE, based on a subcarrier spacing used for the downlink control channel. In a further optional implementation thereof, the stored information includes an association of different subcarrier spacings with one or more of different number of time slots, optionally wherein the number X of time slots in a time slot group is 4 for a subcarrier spacing of 480 kHz and is 8 for a subcarrier spacing of 960 kHz.

According to a sixteenth aspect, provided in addition to one of the first to fifteenth aspects, the determining of the monitoring time slots is performed so the determined monitoring time slots within the time slot group are consecutive, or
wherein the determining of the monitoring time slots is performed independent of whether the determined monitoring time slots within the time slot group are consecutive.

According to a seventeenth aspect, provided in addition to one of the first to sixteenth aspects, the processing circuitry, when in operation, determines a number Y of monitoring time slots within a time slot group from information stored in the UE, optionally wherein the stored information relates to a capability of the UE, optionally wherein the minimum number of monitoring time slots within a time slot group is 1 slot, and the maximum number of monitoring time slots within a time slot group is half of the number X of time slots in each time slot group. In an optional implementation thereof, the UE comprises a transmitter, which in operation, transmits information of the number Y of monitoring time slots within a time slot group to a serving base station serving the UE.

According to a eighteenth aspect, provided in addition to one of the first to seventeenth aspects, the UE comprises a receiver, which in operation, receives, from a serving base station serving the UE, configuration information for configuring the monitoring function at the UE, wherein the configuration information configures one or more monitoring occasions in which the UE monitors the downlink control channel. In an optional implementation the processing circuitry, when in operation, determines, based on the received configuration information, one or more monitoring occasions in which the UE monitors the downlink control channel.

According to a nineteenth aspect, provided in addition to any one of the first to eighteenth aspects, the determining of the monitoring time slots within the time slot group is performed for one or more of:
- a subcarrier spacing, used for the downlink control channel, higher than 120 kHz, optionally a subcarrier spacing of 480 kHz or 960 kHz or higher, and
- a frequency range in which the downlink control channel is transmitted higher than 52.6 GHz, optionally a frequency range of 52.6 GHz to 71 GHz.

According to a 20^{th} aspect, provided in addition to any one of the first to nineteenth aspects, the determining of the monitoring time slots within said time slot group is performed by the processing circuitry in accordance with a third criterion, according to which a minimum time gap of one time slot is available between the monitoring time slots of two consecutive time slot groups.

According to a 21^{st} aspect, provided in addition to any one of the first to nineteenth aspects, in case two monitoring time slots, respectively belonging to two consecutive time slots groups, are consecutive to each other, the processing circuitry, when in operation, determines:
- to skip performing the monitoring function for one of the two consecutive monitoring time slots, or
- to skip performing the monitoring function for a subset of monitoring occasions in one of the two consecutive monitoring time slots.

According to a 22^{nd} aspect, a method is provided comprising the following steps performed by a UE:
determining, for a group of two or more time slots, one or more time slots in said time slot group to be monitored by the UE according to a monitoring function, wherein the monitoring function is operated by the UE for monitoring a downlink control channel in one or more monitoring occasions in one or more time slots for the purpose of receiving a downlink control information message,
performing the determining of the monitoring time slots within said time slot group in accordance with one or more of the following criteria:
   - a first criterion according to which a monitoring time slot includes a monitoring occasion associated with a common search space of the downlink control channel,
   - a second criterion according to which a monitoring time slot includes a monitoring occasion associated with a UE-specific search space of the downlink control channel, and
monitoring the downlink control channel in the determined one or more monitoring time slots of the time slot group.

According to a 23^{rd} aspect, a base station is provided comprising the following. a processing circuitry, which in operation, determines, for a group of two or more time slots, one or more time slots in said time slot group to be monitored by a user equipment, UE, according to a monitoring function, wherein the monitoring function is operated by the UE for monitoring a downlink control channel in one or more monitoring occasions in one or more time slots for the purpose of receiving a downlink control information message transmitted from the base station. The processing circuitry performs the determining of the monitoring time slots within said time slot group in accordance with one or more of the following criteria:
- a first criterion according to which a monitoring time slot includes a monitoring occasion associated with a common search space of the downlink control channel,
- a second criterion according to which a monitoring time slot includes a monitoring occasion associated with a UE-specific search space of the downlink control channel, and

A transmitter of the base station transmits, to the UE, a downlink control information message on the downlink control channel in at least one of the determined one or more monitoring time slots of the time slot group.

According to a 24^{th} aspect, provided in addition to the 23^{rd} aspect, the first criterion relating to the common search space is considered first before the second criterion relating to the UE-specific search space, for the determining of the monitoring time slots within said time slot group

According to a 25^{th} aspect, provided in addition to the 23^{rd} or 24^{th} aspect, for the determining of the monitoring time slots, the processing circuitry considers the UE-specific search spaces in an order of priority, wherein the lower the index of a UE-specific search space, the higher is its priority for being included in a monitoring time slot

According to a 26^{th} aspect, provided in addition to any one of the 23^{rd} to 25^{th} aspects, the first criterion is further defined as:
- a monitoring time slot includes a monitoring occasion associated with a common search space among a first set of common search spaces of the downlink control channel, wherein the first set of common search spaces does not comprise all common search spaces configured for the UE.

In an optional implementation thereof, the first set of common search spaces includes common search spaces that are configured in a dedicated message to the UE and includes common search spaces that are configured commonly for a group of UEs. In a further optional implementation thereof, the first set of common search spaces includes common search spaces of Type-1 configured by a dedicated message to the UE and common search spaces of Type-3, according to 5G communication systems.

According to a 27^{th} aspect, provided in addition to the 26^{th} aspect, the processing circuitry, when in operation, transmits a downlink control information message of common search spaces that do not belong to the first set of common search spaces in additional monitoring time slots of the time slot group different from the monitoring time slots of the time slot group.

According to a 28^{th} aspect, provided in addition to any one of the 23^{rd} to 27^{th} aspects, the determining of the monitoring time slots is performed for each time slot group separately.

According to a 29^{th} aspect, provided in addition to any one of the 23^{rd} to 27^{th} aspects, the determining of the monitoring time slots is performed for a plurality of time slot groups together, wherein the determining results in a common relative location of the monitoring time slots within each time slot group of the plurality of time slot groups. The processing circuitry, when in operation, applies the determined common relative location of the monitoring time slots for determining the monitoring time slots for each of the plurality of time slot groups. In an optional implementation thereof, the determining of the monitoring time slots based on the common relative location of the monitoring time slots is performed until the configuration of the monitoring occasions changes.

According to a 30^{th} aspect, provided in addition to the 29^{th} aspect, the processing circuitry, when in operation, determines whether the configuration of the monitoring occasions changes. In case it is determined that the configuration of the monitoring occasions changes, the processing circuitry, when in operation, performs the determining of the monitoring time slots again for another plurality of time slot groups that are after the change of the configuration of the monitoring occasions, according to the changed configuration of the monitoring occasions, wherein the determining results in another common relative location of the monitoring time slots within each time slot group of the other plurality of slot groups. The processing circuitry, when in operation, applies the determined other common relative location for determining the monitoring time slots for the other plurality of time slot groups after the change of the configuration of the monitoring occasion

According to a 31^{st} aspect, provided in addition to the 29^{th} or 30^{th} aspect, the determining of the monitoring time slots is performed based on a reference time slot group among the plurality of time slots groups. The processing circuitry, when in operation, determines the reference time slot group as that time slot group that:
- is the first time slot group among the plurality of time slot groups,
- is the first time slot group among the plurality of time slot groups that contains a common search space,
- contains the most of common search spaces and UE-specific search spaces among the plurality of time slot groups.

According to a 32^{nd} aspect, provided in addition to the 29^{th} or 30^{th} aspect, the determining of the monitoring time slots is performed considering the monitoring occasions of the plurality of time slot groups. In an optional implementation thereof, for the determining of the monitoring time slots for the plurality of time slot groups, the processing circuitry considers the first criterion and the second criterion for the monitoring occasions of the plurality of time slot groups.

According to a 33^{rd} aspect, provided in addition to any one of the 29^{th} to 32^{nd} aspects, the processing circuitry, when in operation, determines that the configuration of the monitoring occasions changes, in case a transmitter of the base station, when in operation, transmits configuration information to the UE for configuring the monitoring occasions of the UE.

According to a 34^{th} aspect, provided in addition to any one of the 29^{th} to 33^{rd} aspects, the processing circuitry, when in operation, determines that the configuration of the monitoring occasions changes, in case the UE switches from a current beam to a new beam for receiving the downlink control channel from the base station. In an optional implementation thereof, the processing circuitry, when in operation, determines the monitoring occasions based on the beam used by the UE for receiving the downlink control channel from the base station and based on stored configuration information, wherein the stored configuration information includes different configuration information associated with different beams for configuring beam-specific monitoring occasions. In a further optional implementation thereof, a transmitter, when in operation, transmits an indication to the UE, instructing the UE to switch from the current beam to the new beam.

According to a 35^{th} aspect, provided in addition to any one of the 29^{th} to 34^{th} aspects, the change of the configuration of the monitoring occasions includes one or more of:
- a number of monitoring occasions is changed,
- a periodicity of the monitoring occasions is changed,
- a timing of an OFDM symbol of the monitoring occasions is changed,
- a timing of a time slot of the monitoring occasions is changed,
- an aggregation level of the monitoring occasions is changed,
- a number of monitoring candidates per aggregation level is changed.

In an optional implementation thereof, the processing circuitry, when in operation, further determines whether the change of the configuration of the monitoring occasions results in a different time slot of any monitoring occasion compared to the previous configuration of the monitoring occasion. In case it does result in a different time slot of any monitoring occasion, the processing circuitry determines that the configuration of the monitoring occasions has changed for the purpose of whether or not to again perform the determining of the monitoring slots. In case it does not result in a different time slot of any monitoring occasion, the processing circuitry determines that the configuration of the monitoring occasions has not changed for the purpose of whether or not to again perform the determining of the monitoring slots.

According to a 36^{th} aspect, a method is provided comprising the following steps performed by a base station:
determining, for a group of two or more time slots, one or more time slots in said time slot group to be monitored by a user equipment, UE, according to a monitoring function, wherein the monitoring function is operated by the UE for monitoring a downlink control channel in one or more monitoring occasions in one or more time slots for the purpose of receiving a downlink control information message transmitted from the base station,
performing the determining of the monitoring time slots within said time slot group in accordance with one or more of the following criteria:
   - a first criterion according to which a monitoring time slot includes a monitoring occasion associated with a common search space of the downlink control channel,
   - a second criterion according to which a monitoring time slot includes a monitoring occasion associated with a UE-specific search space of the downlink control channel, and
transmitting, to the UE, a downlink control information message on the downlink control channel in at least one of the determined one or more monitoring time slots of the time slot group.

According to a 37^{th} aspect, an integrated circuit is provided, which, in operation, controls a process of a user equipment, the process comprising the following steps performed by the user equipment:
determining, for a group of two or more time slots, one or more time slots in said time slot group to be monitored by the UE according to a monitoring function, wherein the monitoring function is operated by the UE for monitoring a downlink control channel in one or more monitoring occasions in one or more time slots for the purpose of receiving a downlink control information message,
performing the determining of the monitoring time slots within said time slot group in accordance with one or more of the following criteria:
   - a first criterion according to which a monitoring time slot includes a monitoring occasion associated with a common search space of the downlink control channel,
   - a second criterion according to which a monitoring time slot includes a monitoring occasion associated with a UE-specific search space of the downlink control channel, and
monitoring the downlink control channel in the determined one or more monitoring time slots of the time slot group.

According to a 38^{th} aspect, an integrated circuit is provided, which, in operation, controls a process of a base station, the process comprising the following steps performed by the base station:
determining, for a group of two or more time slots, one or more time slots in said time slot group to be monitored by a user equipment, UE, according to a monitoring function, wherein the monitoring function is operated by the UE for monitoring a downlink control channel in one or more monitoring occasions in one or more time slots for the purpose of receiving a downlink control information message transmitted from the base station,
performing the determining of the monitoring time slots within said time slot group in accordance with one or more of the following criteria:
   - a first criterion according to which a monitoring time slot includes a monitoring occasion associated with a common search space of the downlink control channel,
   - a second criterion according to which a monitoring time slot includes a monitoring occasion associated with a UE-specific search space of the downlink control channel, and
transmitting, to the UE, a downlink control information message on the downlink control channel in at least one of the determined one or more monitoring time slots of the time slot group.

### Further Variants, including Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g. cellular (cell) phone, smart phone), a tablet, a personal computer (PC) (e.g. laptop, desktop, netbook), a camera (e.g. digital still/video camera), a digital player (digital audio/video player), a wearable device (e.g. wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g. an appliance, lighting, smart meter, control panel), a vending machine, and any other "things" in a network of an "Internet of Things (loT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

## Claims

1. A user equipment, UE, comprising:
a processing circuitry, which in operation, determines, for a group of two or more time slots, one or more time slots in said time slot group to be monitored by the UE according to a monitoring function, wherein the monitoring function is operated by the UE for monitoring a downlink control channel in one or more monitoring occasions in one or more time slots for the purpose of receiving a downlink control information message,
wherein the processing circuitry performs the determining of the monitoring time slots within said time slot group in accordance with one or more of the following criteria:
• a first criterion according to which a monitoring time slot includes a monitoring occasion associated with a common search space of the downlink control channel,
• a second criterion according to which a monitoring time slot includes a monitoring occasion associated with a UE-specific search space of the downlink control channel, and
the processing circuitry, which in operation, monitors the downlink control channel in the determined one or more monitoring time slots of the time slot group.

2. The UE according to claim 1, wherein the first criterion relating to the common search space is considered first before the second criterion relating to the UE-specific search space, for the determining of the monitoring time slots within said time slot group.

3. The UE according to claim 1 or 2, wherein for the determining of the monitoring time slots, the processing circuitry considers the UE-specific search spaces in an order of priority, wherein the lower the index of a UE-specific search space, the higher is its priority for being included in a monitoring time slot.

4. The UE according to any one of claims 1 to 3, wherein the first criterion is further defined as:
- a monitoring time slot includes a monitoring occasion associated with a common search space among a first set of common search spaces of the downlink control channel, wherein the first set of common search spaces does not comprise all common search spaces configured for the UE,
optionally wherein the first set of common search spaces includes common search spaces that are configured in a dedicated message to the UE and includes common search spaces that are configured commonly for a group of UEs,
optionally wherein the first set of common search spaces includes common search spaces of Type-1 configured by a dedicated message to the UE and common search spaces of Type-3, according to 5G communication systems.

5. The UE according to claim 4, wherein the processing circuitry, when in operation, monitors common search spaces that do not belong to the first set of common search spaces in additional monitoring time slots of the time slot group different from the monitoring time slots of the time slot group.

6. The UE according to any one of claims 1 to 5, wherein the determining of the monitoring time slots is performed for each time slot group separately.

7. The UE according to any one of claims 1 to 5, wherein the determining of the monitoring time slots is performed for a plurality of time slot groups together, wherein the determining results in a common relative location of the monitoring time slots within each time slot group of the plurality of time slot groups, and
wherein the processing circuitry, when in operation, applies the determined common relative location of the monitoring time slots for determining the monitoring time slots for each of the plurality of time slot groups,
optionally wherein the determining of the monitoring time slots based on the common relative location of the monitoring time slots is performed until the configuration of the monitoring occasions changes.

8. The UE according to claim 7, wherein the processing circuitry, when in operation, determines whether the configuration of the monitoring occasions changes,
in case it is determined that the configuration of the monitoring occasions changes, the processing circuitry, when in operation, performs the determining of the monitoring time slots again for another plurality of time slot groups that are after the change of the configuration of the monitoring occasions, according to the changed configuration of the monitoring occasions, wherein the determining results in another common relative location of the monitoring time slots within each time slot group of the other plurality of slot groups, wherein the processing circuitry, when in operation, applies the determined other common relative location for determining the monitoring time slots for the other plurality of time slot groups after the change of the configuration of the monitoring occasion.

9. The UE according to claim 7 or 8, wherein the determining of the monitoring time slots is performed based on a reference time slot group among the plurality of time slots groups, wherein the processing circuitry, when in operation, determines the reference time slot group as that time slot group that:
• is the first time slot group among the plurality of time slot groups,
• is the first time slot group among the plurality of time slot groups that contains a common search space, or
• contains the most of common search spaces and UE-specific search spaces among the plurality of time slot groups within the fewest time slots.

10. The UE according to claim 7 or 8, wherein the determining of the monitoring time slots is performed considering the monitoring occasions of the plurality of time slot groups,
optionally wherein for the determining of the monitoring time slots for the plurality of time slot groups, the processing circuitry considers the first criterion and the second criterion for the monitoring occasions of the plurality of time slot groups.

11. The UE according to any one of claims 7 to 10, wherein the processing circuitry, when in operation, determines that the configuration of the monitoring occasions changes, in case
• a receiver of the UE, when in operation, receives configuration information from a serving base station for configuring the monitoring occasions,
optionally wherein the configuration information for the monitoring occasions is received in a message of the Radio Resource Control, RRC, protocol.

12. The UE according to any one of claims 7 to 11, wherein the processing circuitry, when in operation, determines that the configuration of the monitoring occasions changes, in case
• the UE switches from a current beam to a new beam for receiving the downlink control channel from a serving base station,
optionally wherein the processing circuitry, when in operation, determines the monitoring occasions based on the beam used for receiving the downlink control channel from the serving base station and based on stored configuration information, wherein the stored configuration information includes different configuration information associated with different beams for configuring beam-specific monitoring occasions,
optionally wherein the processing circuitry, when in operation, determines that the UE is to switch from the current beam to the new beam based on an indication received from the serving base station.

13. The UE according to any one of claims 7 to 12, wherein the change of the configuration of the monitoring occasions includes one or more of:
• a number of monitoring occasions is changed,
• a periodicity of the monitoring occasions is changed,
• a timing of an OFDM symbol of the monitoring occasions is changed,
• a timing of a time slot of the monitoring occasions is changed,
• an aggregation level of the monitoring occasions is changed,
• a number of monitoring candidates per aggregation level is changed,
optionally wherein the processing circuitry, when in operation, further determines whether the change of the configuration of the monitoring occasions results in a different time slot of any monitoring occasion compared to the previous configuration of the monitoring occasion, and
in case it does result in a different time slot of any monitoring occasion, the processing circuitry determines that the configuration of the monitoring occasions has changed for the purpose of whether or not to again perform the determining of the monitoring slots,
in case it does not result in a different time slot of any monitoring occasion, the processing circuitry determines that the configuration of the monitoring occasions has not changed for the purpose of whether or not to again perform the determining of the monitoring slots.

14. The UE according to any one of claims 1 to 13, wherein the determining of the monitoring time slots within said time slot group is performed by the processing circuitry in accordance with a third criterion, according to which a minimum time gap of one time slot is available between the monitoring time slots of two consecutive time slot groups, or wherein in case two monitoring time slots, respectively belonging to two consecutive time slots groups, are consecutive to each other, the processing circuitry, when in operation, determines:
to skip performing the monitoring function for one of the two consecutive monitoring time slots, or
° to skip performing the monitoring function for a subset of monitoring occasions in one of the two consecutive monitoring time slots.

15. A base station comprising:
a processing circuitry, which in operation, determines, for a group of two or more time slots, one or more time slots in said time slot group to be monitored by a user equipment, UE, according to a monitoring function, wherein the monitoring function is operated by the UE for monitoring a downlink control channel in one or more monitoring occasions in one or more time slots for the purpose of receiving a downlink control information message transmitted from the base station,
wherein the processing circuitry performs the determining of the monitoring time slots within said time slot group in accordance with one or more of the following criteria:
• a first criterion according to which a monitoring time slot includes a monitoring occasion associated with a common search space of the downlink control channel,
• a second criterion according to which a monitoring time slot includes a monitoring occasion associated with a UE-specific search space of the downlink control channel, and
a transmitter, which in operation, transmits, to the UE, a downlink control information message on the downlink control channel in at least one of the determined one or more monitoring time slots of the time slot group.
